(19) Europäisches Patentamt
European Patent Office
Office européen des brevets

(11) **EP 3 211 540 A1**

(12) **EUROPEAN PATENT APPLICATION**
published in accordance with Art. 153(4) EPC

(43) Date of publication:
**30.08.2017 Bulletin 2017/35**

(51) Int Cl.:
*G06F 17/30* (2006.01)　　*G08G 1/16* (2006.01)

(21) Application number: **15852769.7**

(22) Date of filing: **08.10.2015**

(86) International application number:
**PCT/JP2015/078649**

(87) International publication number:
**WO 2016/063742 (28.04.2016 Gazette 2016/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.10.2014　JP 2014213302**

(71) Applicant: **Clarion Co., Ltd.**
**Saitama-shi, Saitama 330-0081 (JP)**

(72) Inventors:
• **KANEMARU, Takashi**
**Tokyo 100-8280 (JP)**
• **UCHIDA, Naokazu**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **INFORMATION PRESENTATION DEVICE, METHOD, AND COMPUTER PROGRAM PRODUCT**

(57)　An information presentation apparatus includes: a status estimation unit that identifies one or more tasks from input information which has been input, and task information indicative of one or more tasks indicating a status; a load estimation unit that identifies one or more subtasks based on each of the identified tasks and subtask information indicative of one or more subtracts, each indicating a work element possibly executed by an operator, in the status of each task, and acquires a required load amount, which is a mental load on each of the one or more subtasks, based on the identified subtask and required subtask amount information indicative of the required load amount; a margin estimation unit that acquires a margin based on the acquired required load amount; and a presented information selection unit that selects information to be presented based on the margin.

FIG.1

**Description**

TECHNICAL FIELD

The present invention relates to an information presentation apparatus and method, and a computer program product.

BACKGROUND ART

PTL 1 describes a "navigation system including: a drive pathway data storing means that stores drive pathway data indicative of a drive pathway where a vehicle driven by a user is scheduled to run; a correlation data storing means that stores workload correlation data indicative of a correlation between a behavior and workload of the user who is driving the vehicle; an information-to-be-provided storing means that stores information scheduled to be provided which is information to be provided to the user when driving on the drive pathway; a user behavior estimation processing means that executes user behavior estimation processing for estimating the behavior of the user who is driving on the drive pathway, on the basis of the drive pathway data; a workload prediction processing means that executes workload prediction processing for predicting the workload corresponding to the behavior of the user who is driving on the drive pathway, on the basis of the estimated behavior of the user and the workload correlation data; a scheduling processing means that executes scheduling processing for determining timing to provide the user with the information scheduled to be provided when driving on the drive pathway, on the basis of the predicted workload; and an information output means that outputs the information scheduled to be provided to the user at the timing."

PTL 2 describes a "driving assistance apparatus including: a case storage means that stores a plurality of a driver's types, which are classified according to a combination of at least either law compliance tendency or information collection ability of the driver, and a degree of driving operation skills, and a plurality of case data indicative of a dangerous status of a vehicle by associating the plurality of the driver's types with the plurality of case data; a classification means that classifies an assistance target driver into any one of the plurality of types on the basis of the combination of either the law compliance tendency or the information collection ability of the assistance target driver, and the degree of the driving operation skills; an extraction means that extracts case data corresponding to the type classified by the classification means from the case storage means; and a drive assistance means that assists driving by the assistance target driver on the basis of the case data extracted by the extraction means."

CITATION LIST

PATENT LITERATURE

PTL 1: Japanese Patent No. 4637073
PTL 2: Japanese Patent Application Laid-Open Publication No. 2008-46759

SUMMARY OF THE INVENTION

PROBLEMS TO BE SOLVED BY THE INVENTION

The technique described in PTL 1 is used for the workload correlation data indicative of the correlation between the behavior and the workload of the user. Specifically speaking, it is necessary to define a status and a mental workload (hereinafter referred to as WL) in that status in advance. However, in fact, almost countless numbers of statuses can exist. It is difficult to define and measure all WLs in these statuses and expansion is not easy. Furthermore, the status may change due to many factors such as not only external factors, but also internal factors, and it is very difficult to calculate the WL in such status.

Regarding the technique described in PTL 2, it is disclosed that the type is identified by analyzing the user's behavior based on the content of driving operation and a driving assistance method is changed according to the type. Specifically speaking, certain optimization for the user is performed, but the driving assistance method is to present accident cases to the user and, therefore, it is not considered as appropriate assistance by assuming individuals' workloads with respect to timing and content of information presentation.

The present invention was devised in consideration of the above-described circumstances and it is an object of the invention to provide an information presentation technique that provides a high level of coverage with respect to an enormous amount of statuses, realizes easy maintenance and management, and takes users' individual mental loads into consideration.

MEANS TO SOLVE THE PROBLEMS

According to a first aspect of the present invention, an information presentation apparatus includes: a storage unit that stores task information indicative of one or more tasks each indicating a status, subtask information indicative of one or more subtasks each indicating a work element possibly executed by an operator in the status of each task according to a first variable indicative of habituation of the operator with respect to each of the one or more tasks regarding each piece of the task information, and required subtask amount information indicative of a required load amount indicative of a mental load on each of the one or more subtasks according to a second variable indicative of a safe driving tendency the operator; an information acquisition unit to which input information about the status is input from one or more external information sources; a status estimation unit that identifies the one or more tasks based on the input information and the task information; a driving characteristics judgment unit that generates the first variable indicative of habituation of the operator with respect to each of the one or more tasks regarding each piece of the task information and the second variable indicative of the operator's safe driving tendency, based on the input information; a personal characteristics information management unit that generates operator-based subtask information based on the first variable, the second variable, and the subtask information; a load estimation unit that identifies the one or more subtasks based on the one or more tasks identified by the status estimation unit, and the operator-based subtask information, and the load estimation unit also acquires the required load amount based on the identified one or more subtasks and the required subtask amount information; a margin estimation unit that acquires a margin based on the acquired required load amount; and a presented information selection unit that selects information to be presented based on the margin.

ADVANTAGEOUS EFFECTS OF THE INVENTION

According to the technique of the present invention, the information presentation technique that provides a high level of coverage with respect to an enormous amount of statuses, realizes easy maintenance and management, and takes the mental load into consideration can be implemented. Other objects, configurations, effects, and so on will be made clear in the description of embodiments below.

BRIEF DESCRIPTION OF DRAWINGS

Fig. 1 is an example of a block diagram of an information presentation apparatus according to this embodiment;
Fig. 2 is an explanatory diagram of an example of a task condition table;
Fig. 3 is an explanatory diagram of an example of a subtask table;
Fig. 4 is an explanatory diagram of an example of a required subtask amount table;
Fig. 5 is an explanatory diagram of an example of a load weighting table;
Fig. 6 is an explanatory diagram of an example of an information presentation table;
Fig. 7 is a hardware configuration example of each of an information presentation apparatus, a data server, and a computer;
Fig. 8 is an example of a processing flowchart of the information presentation apparatus;
Fig. 9 is an example of input information;
Fig. 10 is an example of a flowchart of status estimation processing (S802);
Fig. 11 is an example of effective task group obtained as a result of the status estimation processing;
Fig. 12 is an example of a flowchart of subtask estimation processing (S803);
Fig. 13 is an example of an effective subtask group generated by the subtask estimation processing;
Fig. 14 is an example of a flowchart of load calculation processing (S804);
Fig. 15 is an example of a screen displayed when a presentation request is not input from any of presented information sources;
Fig. 16 is an example of a screen displayed when a presentation request is input from a presented information source which is a music player;
Fig. 17 is an example of a screen displayed when a presentation request is input from a presented information source which is a navigation system;
Fig. 18 is an example of a screen displayed when a presentation request is input from a presented information source which is ADAS;
Fig. 19 is an example of input information acquired as chronological information;
Fig. 20 is an example of a screen which displays chronological margins;

Fig. 21 is an example of a screen in which a driver's preference for the margin with respect to a pathway to guide them is set;

Fig. 22 illustrates transitions of the margin upon moving;

Fig. 23 is an example of a screen for creating and updating a task condition table;

Fig. 24 is an example of a screen for creating and updating a subtask table;

Fig. 25 is an example of a screen for creating and updating a required subtask amount table;

Fig. 26 is an example of a block diagram of an information presentation apparatus according to this embodiment;

Fig. 27 is an explanatory diagram of an example of the subtask table;

Fig. 28 is an explanatory diagram of an example of the required subtask amount table;

Fig. 29 is an explanatory diagram of an example of a personal characteristics information table;

Fig. 30 is an explanatory diagram of an example of an individual-based subtask table;

Fig. 31 is an example of a flowchart of personal information initialization processing;

Fig. 32 is an example of a screen for selecting driving history;

Fig. 33 is an example of a screen for selecting information notice frequency;

Fig. 34 is an example of a flowchart of individual-based subtask table creation processing;

Fig. 35 is an example of a flowchart of personal characteristics information table update processing;

Fig. 36 is an example of a flowchart of individual-based subtask table update (S3504) processing; and

Fig. 37 is an example of a screen for creating and updating a personal characteristics information table.

DESCRIPTION OF EMBODIMENTS

(First Embodiment)

An embodiment of the present invention will be explained below in detail with reference to the drawings. In the following description, the same reference numerals are assigned to the same components and an explanation about them has been omitted.

In the following description, an information presentation apparatus will be explained as an object that can move together with a mobile object. The mobile object herein used means an object capable of moving by means of either one of external and internal moving functions, such as a vehicle or a human themselves. Moreover, an operator means a person to whom presented information presented and controlled by the information presentation apparatus is presented and who conducts actions, behaviors, operations, and acts which are directly or indirectly related to movements of the mobile object. Specifically speaking, for example, when the mobile object is a vehicle, the operator is a driver of that vehicle; and when the mobile object is a person, the operator is that person. The actions, behaviors, operations, and acts which are directly or indirectly related to movements of the mobile object will be also hereinafter collectively referred to as work.

In the following description, the information presentation apparatus will be explained as an apparatus that is mounted in a vehicle and controls provision of, for example, pathway guidance, vehicle alarms, information about safety assistance, and infotainment such as a music player, to the operator; however, the information presentation apparatus will not be limited to this example.

[Description of Configuration]

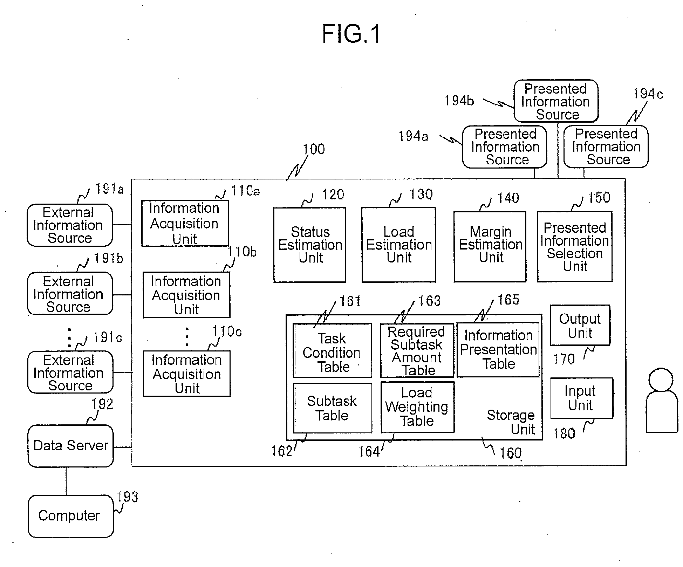

Fig. 1 is an example of a block diagram of an information presentation apparatus according to this embodiment. An information presentation apparatus 100 includes, for example, one or more information acquisition units 110, a status estimation unit 120, a load estimation unit 130, a margin estimation unit 140, a presented information selection unit 150, a storage unit 160, an output unit 170, and an input unit 180. The storage unit 160 stores, for example, a task condition table 161, a subtask table 162, a required subtask amount table 163, a load weighting table 164, and an information presentation table 165.

The task condition table 161 defines one or more tasks indicative of the current status. The subtask table 162 defines a subtask or subtasks which are one or more work elements with respect to each task. The required subtask amount table 163 defines a required load amount of each subtask. The load weighting table 164 defines, for example, weight applied to the required load amount. The information presentation table 165 defines conditions of the margin when presenting information. The details of each table will be described later.

There may be one or more information acquisition units 110 and one or more external information sources 191, respectively; however, in this embodiment, the information presentation apparatus 100 has an information acquisition unit 110a to an information acquisition unit 110c and each of the information acquisition unit 110a to the information acquisition unit 110c receives input information from each of an external information source 191a to an external information source 191c. However, the information acquisition units 110 and the external information sources 191 do not need to have a one-to-one relationship.

There is no particular limitation on the type of the external information source 191 as long as it acquires the input information which is information to judge the status, such as information about the vehicle itself, outside the vehicle, the operator, and so on. An example of such external information source is a CAN (Controller Area Network) capable of acquiring vehicle information which is composed of, for example, speeds, accelerator quantity, brake status, turning indicator status, etc. of the vehicle. Furthermore, there is a car navigation system capable of acquiring, for example, a class of a road where the vehicle is running, intersection information, driving position coordinates, traveling directions at intersections as a driving plan, and information about roads to drive.

Moreover, there is an Advanced Driving Assistance System (hereinafter referred to as ADAS) that measures a surrounding area of the vehicle by using cameras and sensors such as infrared radiation sensors, detects running vehicles and pedestrians ahead of and around the vehicle, detects distances from them or time until a collision with them, detects a driving lane, and detects departure from the driving lane. Furthermore, there is a VICS (Vehicle Information and Communication System [registered trademark]) that provides traffic jam information, parking guidance information, weather information, lane regulations, etc. by using radio waves and beacons. Furthermore, there is an Intelligent Transport System (hereinafter abbreviated as ITS) capable of evaluating the relationship between the operator's own vehicle and other vehicles by means of communications with the other vehicles and the transportation infrastructure.

Moreover, the data server 192 may function as an external information source and provide transportation information, weather information, and other information via communications networks such as the Internet not illustrated in the drawing.

The information acquisition unit 110 supports public communication techniques, for example, serial communications such as USB (Universal Serial Bus) and network communications using protocols such as TCP/IP (Transmission Control Protocol/Internet Protocol) and HTTP (Hypertext Transfer Protocol). Serialized information may be input to the information acquisition unit 110 from files transmitted from a storage device (which is not indicated in the diagram) in consideration of temporal timing. Moreover, at least one appropriate information acquisition unit 110 may be selected from among the plurality of information acquisition units 110 according to the input information and the input timing.

The status estimation unit 120 identifies one or more tasks based on the input information and the task condition table 161. The load estimation unit 130 identifies one or more subtasks based on each of the identified tasks and the subtask table 162 and acquires a required load amount based on the identified each of the subtasks, the required subtask amount table 163, and so on. The margin estimation unit 140 acquires a margin based on the required load amount. The presented information selection unit 150 selects information to be presented from the margin and the information presentation table 165. Under this circumstance, the information to be presented can be acquired from one or more presented information sources 194. Referring to Fig. 1, a presented information source 194a to a presented information source 194c are indicated, but the number of the presented information sources 194 is not limited to this example.

Each piece of information such as the presented information is output to the output unit 170. Information to be input to the information presentation apparatus 100 is input to the input unit 180. Fig. 1 illustrates an example in which the output unit 170 and the input unit 180 are respectively provided in the information presentation apparatus 100; however, the invention is not limited to this example and the output unit 170 and the input unit 180 may be provided outside the information presentation apparatus 100. Furthermore, there may be more than one output unit 170 and more than one input unit 180, respectively.

There is no particular limitation on the presented information source as long as it can provide the presented information to be presented to the operator. Examples of the presented information source and the presented information are vehicle alarms such as a low fuel warming and a charge alarm provided from a specified system (such as ECU [Electronic Control Unit]) included in the vehicle. Moreover, examples of the presented information source and the presented information include alarms and cautions such as a warning of collision with a vehicle in front and a pedestrian hit warning which are provided by ADAS. Furthermore, examples of the presented information source and the presented information include traffic jam information, parking guidance information, weather information, and lane regulations which are provided by VICS. Furthermore, examples of the presented information source and the presented information include map displays, traveling directions, and so on provided by a navigation system. Furthermore, the provided information may be information for infotainment. Such information for the infotainment relates to each information of, for example, operation modes of a music player, album name information, and song title information and these pieces of information can be provided from the music player or other systems mounted in the vehicle. Furthermore, the provided information may be e-mails or messages provided from arbitrary applications. Furthermore, the aforementioned provided information may be acquired from the data server 192 via a communications network not indicated in the diagram.

Incidentally, the presented information source 194 may function as the external information source 191 to which the input information is input. On the other hand, the external information source 191 may function as the presented information source 194 that provides the presented information.

Furthermore, the computer 193 is connected to the information presentation apparatus 100 via the communications network not indicated in the drawing and the data server 192, via the communications network not indicated in the drawing, or directly.

Now, an example of tables stored in the storage unit 160 will be explained in detail. Each of the tables explained below may be stored in the storage unit 160 in advance, or may be created or updated at any desired timing.

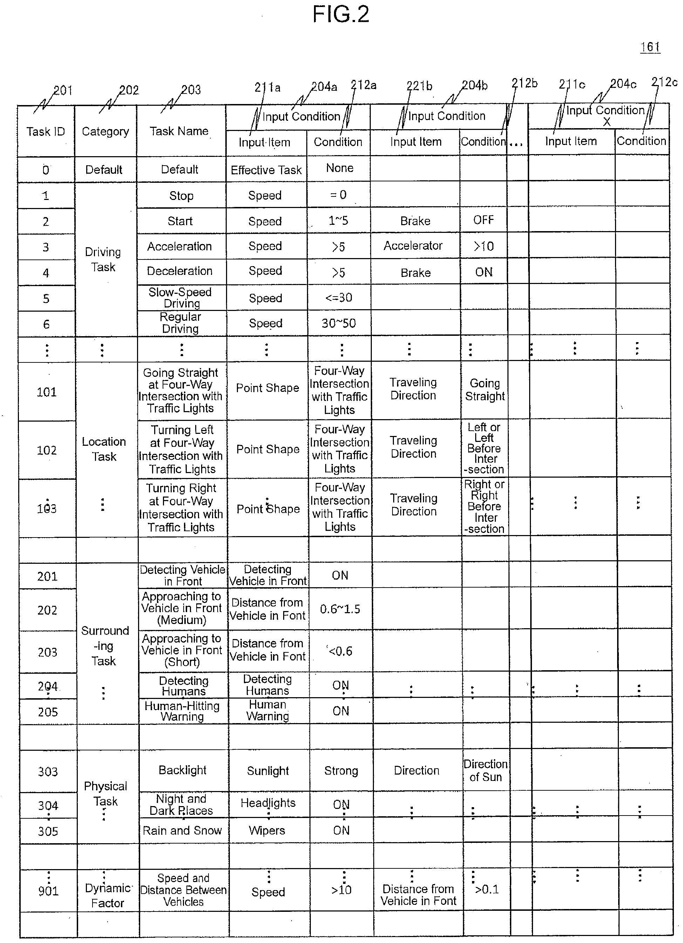

Fig. 2 is an explanatory diagram of an example of the task condition table. Each record of the task condition table 161 includes a task ID 201, a category 202, a task name 203, and one or more input conditions 204 (an input condition 204a to an input condition 204c in the case of Fig. 2). The input condition 204 includes an input item 211 (an input item 211 a to an input item 211 c in the case of Fig. 2) and a condition 212 (a condition 212a to a condition 212c in the case of Fig. 2). The input item 211 indicates a type of information and the condition 212 defines a condition for a value of the input item 211 for the same record.

The task condition table 161 defines conditions for identifying each of the tasks. The task herein used means a status which relates to at least either one of the mobile object and the operator and in which the operator can be made to perform work and a mental load may be imposed on the operator. Fig. 2 illustrates an example in which a task is classified into any one of a driving task, a location task, a surrounding task, a physical task, and a dynamic factor as shown in the category 202. The driving task, the location task, the surrounding task, and the physical task among the above-mentioned tasks are applied to the status which relates to at least either one of the mobile object and the operator and in which the operator is made to perform the work and the mental load is imposed on the operator.

As examples of the driving task, stop, start, acceleration, etc. at the time of driving are defined. As examples of the location task, locations and behaviors at such locations such as going straight at a four-way intersection with traffic lights, turning right at the four-way intersection, and turning left at the four-way intersection are defined. As examples of the surrounding task, detection of a vehicle in front, a degree of approach to the vehicle in front, and similarly the relationship with pedestrians, etc. are defined. As examples of the physical task, backlight, night and dark places, etc. are defined. These can be defined as appropriate according to the work performed during movements of the mobile object. Furthermore, behavior elements may be classified to expand the table by referring to the aforementioned category classification as set forth in the ISO standard ISO 10075.

Furthermore, Fig. 2 illustrates an example of further defining the dynamic factor. The dynamic factor is a weight applied to the status which relates to at least either one of the mobile object and the operator and in which the operator is not necessarily made to perform the work with respect to only that dynamic factor, but the mental load can be imposed on the operator. Fig. 2 illustrates an example in which the dynamic factor is defined by a speed and an inter-vehicle distance. This dynamic factor can be defined by, for example, an intensity function "f(v, x)" by using a vehicle speed v and an inter-vehicle distance x as input variables. Accordingly, not only the mental load caused by performing the work, but also the mental load caused by the status can be considered by defining the dynamic factor.

Incidentally, the dynamic factor is not limited to the above-mentioned example. For example, a discrete value indicating, for example, the weather which is input as the input information may be used to define the dynamic factor. In this case, for example, when the weather information input is "sunny," a mapping table which sets load intensity as 1.0 as reference and defines "cloudy" as 0.95, "rain" as 1.1, "snow" as 1.2, and so on and the dynamic factor may be acquired according to the input information that is actually input.

Furthermore, the tasks do not necessarily have to be categorized into any one of the categories and the categories are not limited to those indicated in the drawing.

The input condition 204 defines a condition to judge, based on the input information, that the current status is a task (status) indicated in the task name 203 of the same record. Referring to Fig. 2, when conditions of all the input conditions 204 of the same record are satisfied, that is, when conditional expressions of all the conditions 212 are satisfied, it is judged that the relevant task is effective.

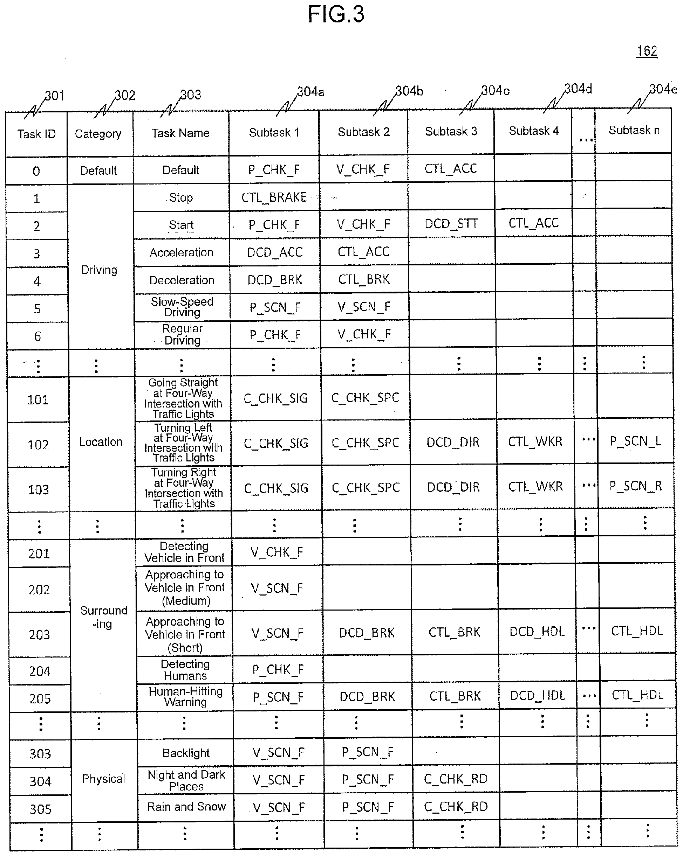

Fig. 3 is an explanatory diagram of an example of the subtask table. Each record of the subtask table 162 includes a task ID 301, a category 302, a task name 303, and one or more subtasks 304 (a subtask 304a to a subtask 304e in Fig. 3). The task ID 301, the category 302, and the task name 303 of the subtask table 162 correspond to the relevant items of the aforementioned task condition table 161, respectively.

The subtask table 162 defines conditions to identify each of the subtasks. The subtask herein used means a work element which may possibly be executed by the operator in the status indicated by the task. Under this circumstance, one or more subtasks are defined for one task. Therefore, for example, regarding one task whose task name 303 is, for example, "start," a plurality of subtasks 304 such as "P_CHK_F (pedestrian check (front))" and "V_CHK_F (vehicle check (front)))" can be defined.

The subtasks are, for example, work such as check work, judgment work, and operations conducted by the operator when they actually drive a vehicle. These subtasks with respect to, for example, driving a vehicle can be defined in accordance with driving instructional regulations and manners or check work generally conducted on the operator on an empirical manner.

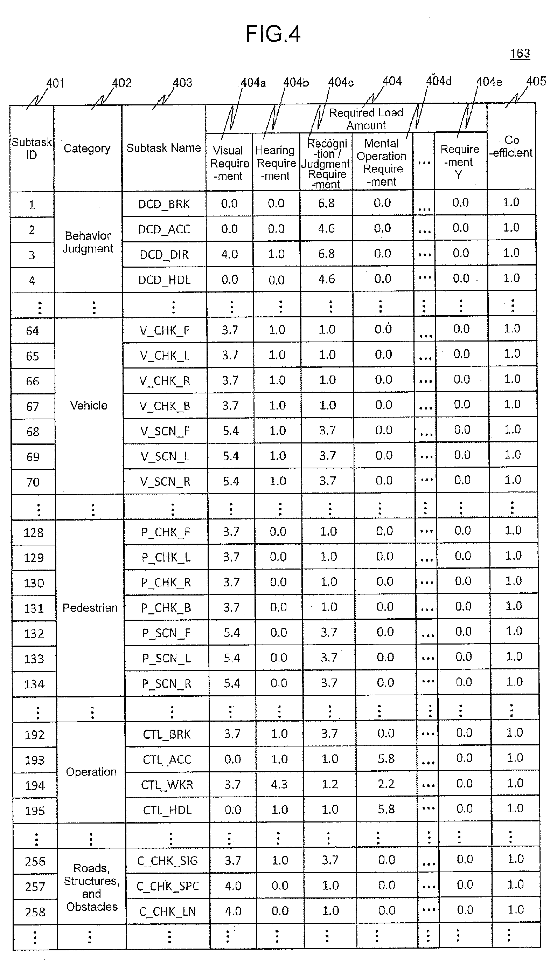

Fig. 4 is an explanatory diagram of an example of the required subtask amount table. Each record of the required subtask amount table 163 includes a subtask ID 401, a category 402, a subtask name 403, a required load amount 404, and a coefficient 405. The subtask name 403 of the required subtask amount table 163 corresponds to the subtask 304 of the aforementioned subtask table 162.

The required load amount 404: indicates a mental load on the operator when performing work defined by the subtask; and can indicate a required amount for each of one or more required attributes. The required attributes indicate the types of work which imposes the mental load on the operator. Fig. 4 illustrates an example in which the required attributes include a visual requirement 404a, a hearing requirement 404b, a recognition/judgment requirement 404c, a mental operation requirement 404d, and so on. Regarding these attributes, definitions of required amounts which are defined by conventional studies can be used and intensity of each required attribute of each subtask can be defined. However, the required attributes are not limited to those mentioned above. For example, a degree of unpleasantness, time pressure, a degree of dissatisfaction, and so on may be defined as other required attributes.

The coefficient 405 is defined as a weight for the relevant subtask and can be defined on the basis of, for example, actual work time and the number of times of work of the subtask.

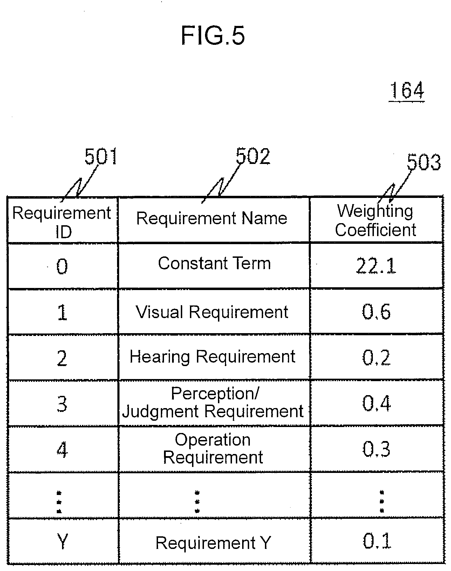

Fig. 5 is an explanatory diagram of an example of the load weighting table 164. Each record of the load weighting table 164 includes a requirement ID 501, a requirement name 502, and a weighting coefficient 503. The requirement name 502 corresponds to each of the required attributes included in the required load amount 404 of the required subtask amount table 163. The weighting coefficient 503 is defined as weighting applied to each of the required attributes.

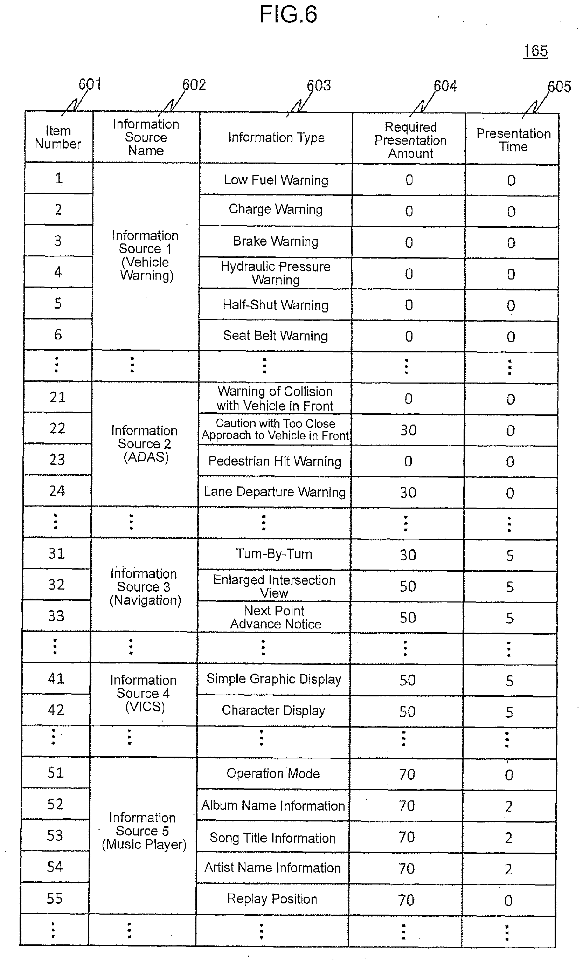

Fig. 6 is an explanatory diagram of an example of the information presentation table. Each record of the information presentation table 165 includes an item number 601, an information source name 602, an information type 603, a required presentation amount 604, and a presentation time 605. The information source name 602 and the information type 603 indicate provided information which are provided from the presented information source 194. The required presentation amount 604 indicates a condition to judge whether to provide the provided information or not; and in this example, the required presentation amount 604 indicates the operator's margin required to provide the provided information. The margin will be described later. The presentation time 605 indicates duration to present the provided information.

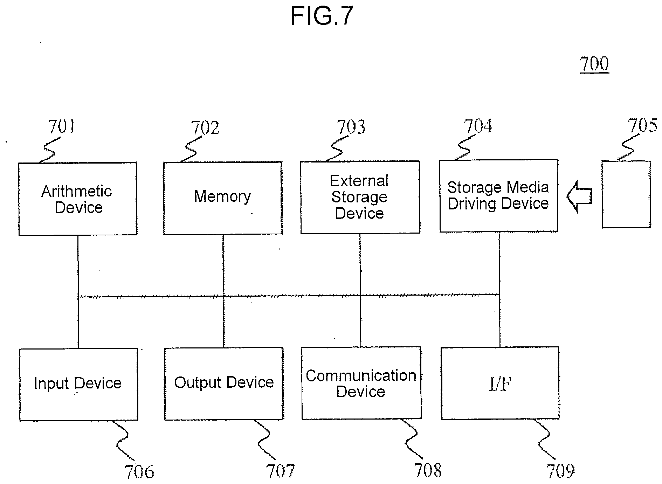

Fig. 7 is a hardware configuration example of each of the information presentation apparatus, a data server, and a computer. A computer 700 (the information presentation apparatus 100, the data server 192, or the computer 193) includes an arithmetic device 701, a memory 702, an external storage device 703, a storage media driving device 704, an input device 706, an output device 707, a communication device 708, an I/F (Interface) 709, and so on.

The arithmetic device 701 is, for example, a CPU (Central Processing Unit). The memory 702 is a volatile or nonvolatile memory. The external storage device 703 is, for example, an HDD (Hard Disk Drive) or an SSD (Solid State Drive). The storage media driving device 704 can read data from, or write data to, a CD (Compact Disk), a DVD (Digital Versatile Disk), or other arbitrary portable storage media 705. The input device 706 includes a touch panel, a keyboard, numeric key pads, a mouse, and a microphone. The output device 707 includes, for example, displays such as a liquid-crystal monitor, a head-up display, a video projector, and a character output device, devices such as an amplifier, a speaker, and headphones for displaying auditory information such as sounds, music, and acoustic icons, display devices by means of the sense of touch such as pressures and temperatures, and olfactory devices for outputting chemical substances by, for example, generating odors. The input device 706 and the output device 707 may be implemented by one device such as a touch panel. The communication device 708 is, for example, an NIC (Network Interface Card) for connecting to the communications network not indicated in the drawing. The I/F 709 is an interface for connecting to external equipment.

Each of the status estimation unit 120, the load estimation unit 130, the margin estimation unit 140, and the presented information selection unit 150 can be implemented by loading a specified program to the memory 702 and having the arithmetic device 701 execute the program.

This specified program may be downloaded from the storage medium 705 via the storage media driving device 704, or from the communications network not indicated in the drawing via the communication device 708, into the external storage device 703, then loaded to the memory 702, and executed by the arithmetic device 701. In this way, the program is supplied as a data signal (carrier waves) received via the communication device 708 or as a computer program product of the storage medium 705 or the like. Furthermore, the program may be directly loaded to the memory 702 from the storage medium 705 via the storage media driving device 704 or from the communications network via the communication device 708 and executed by the arithmetic device 701.

Alternatively, some or all of the status estimation unit 120, the load estimation unit 130, the margin estimation unit 140, and the presented information selection unit 150 may be implemented as hardware by means of, for example, circuits.

Furthermore, the storage unit 160 may be implemented by all or some of the memory 702, the external storage device 703, the storage media driving device 704, the storage medium 705, and so on. Alternatively, the storage unit 160 may be implemented by having the arithmetic device 701 execute the aforementioned program and controlling some or all of the memory 702, the external storage device 703, the storage media driving device 704, the storage medium 705, and so on.

Furthermore, the output unit 170 can be implemented by the output device 707. The input unit 180 can be implemented by at least either one of the input device 706 and the I/F 709. Furthermore, the input unit 180 may be implemented by an input device which is connected via the communications network not indicated in the drawing and the communication device 708. Furthermore, the input unit 180 can be implemented by control of the I/F 709 or the communication device 708 by means of a function that is implemented by loading a specified program to the memory 702 and having the arithmetic device 701 execute the program. The information acquisition unit 110 can be implemented by the I/F 709 or the communication device 708or by causing a function that is implemented by loading the specified program to the memory 702 and having the arithmetic device 701 execute it to control the I/F 709 or the communication device 708.

Each of the external information source 191, the presented information source 194, and the data server 192 may be connected to the information presentation apparatus 100 via at least either one of the communication device 708 and the I/F 709.

Furthermore, each unit of the information presentation apparatus 100 may be implemented by one device or may be implemented by being distributed to a plurality of devices.

[Description of Processing]

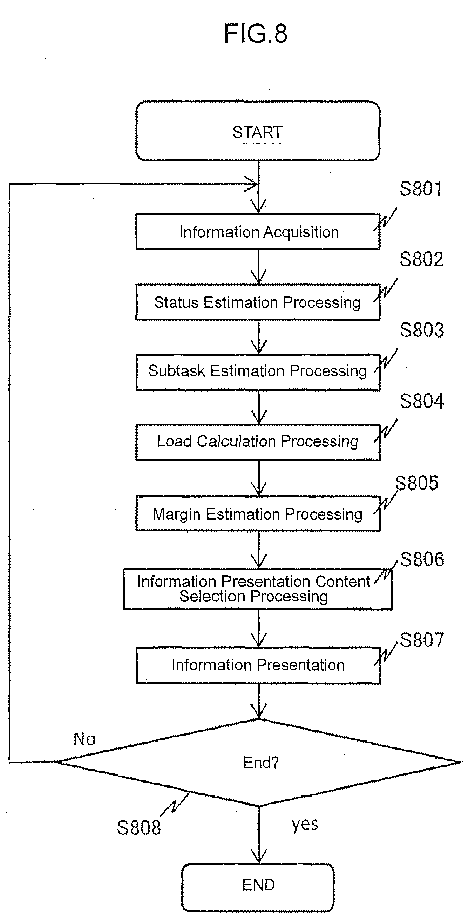

Fig. 8 is an example of a processing flowchart of the information presentation apparatus. This operation is executed at every specified time (for example, every 0.5 [sec]). Furthermore, the following explanation will be given assuming that a presentation request for the operator to present the presented information is input from one or more presented information sources 194 to the presented information selection unit 150 for the information presentation apparatus 100.

Firstly, each of the information acquisition units 110 acquires the input information from each of the external information sources 191 (S801). The then-acquired input information is transmitted to the status estimation unit 120. The status estimation unit 120 executes status estimation processing for acquiring an effective task group, which is one or more tasks, according to the input condition by using the task condition table 161 (S802). The details of the status estimation processing will be explained later. The status estimation unit 120 transmits the acquired effective task group to the load estimation unit 130.

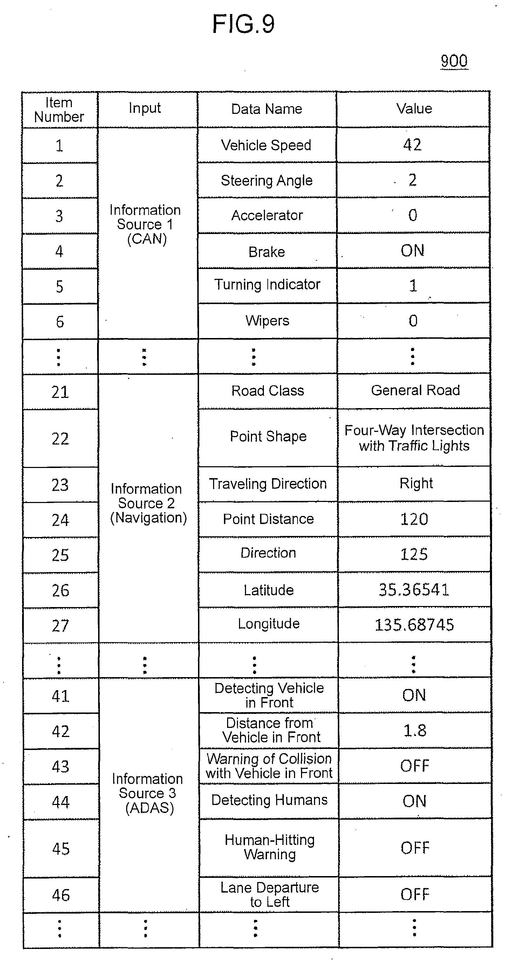

Fig. 9 is an example of the input information. The example of input information 900 shows that a vehicle speed 42[km/h], a steering wheel's steering angle 2 [degrees], an accelerator amount 0[%], a brake status OFF, and so on are input as vehicle information from CAN as the external information source 191a. Furthermore, it is shown that a general road as a road class, a four-way intersection with traffic lights as a point shape, right as a traveling direction, and so on are input as information from the car navigation system as the external information source 191 b. Furthermore, it is shown that detecting a vehicle in front ON, the inter-vehicle distance 1.8 [sec], a warning of a collision with a vehicle in front OFF, and so on are input as ADAS information from the external information source 191 c.

Incidentally, when two or more pieces of input information are input from the external information source 191 and each of two or more information acquisition units 110 acquires the input information, either one of the information acquisition units 110 may transmit the two or more pieces of input information collectively to the status estimation unit 120 as an example is illustrated in the input information 900.

The load estimation unit 130 executes subtask estimation processing for dividing each task of the effective task group into subtasks and acquiring an effective subtask group by using the subtask table 162 (S803). Next, the load estimation unit 130 executes load calculation processing for calculating the load on the operator in the current status by using the subtask table 162, the required subtask amount table 163, and the load weighting table 1641(S804).

The margin estimation unit 140 executes margin estimation processing (S805). Therefore, the margin estimation unit 140 defines the margin as an amount calculated by subtracting the load amount calculated by the load estimation unit 130 from a load limit amount.

The load limit amount is a maximum value of the mental load imposed on the operator. The load limit amount may be a logical maximum value of the aforementioned required load amount, an actually measured value of the required load amount when performing specific work with a high load, or an estimate value of the then-calculated required load amount; however, the load limit amount is not limited to these values. The following description will be given by assuming that the load limit amount is determined in advance. However, the load limit amount is not limited to this example and may be made variable depending on an established task or subtask.

The margin estimation unit 140 calculates the margin as the difference between the load limit amount and the required load amount calculated by the aforementioned processing and transmits the calculated margin to the presented information selection unit 150.

Under this circumstance, an explanation will be given about an example in which the required load amount is within a range from 0 to 100 for ease of explanation and the load limit amount is set to 100 which is its maximum value. In this case, when the required load amount calculated by the aforementioned processing is 70, the margin is calculated as 30 (100 - 70 = 30).

Next, the presented information selection unit 150 executes information presentation content selection processing (S806). Therefore, the presented information selection unit 150: judges whether the presented information can be presented or not, on the basis of the information presentation table 165, the presentation request from each of the presented information sources 194, and the margin; and controls presentation of the information in accordance with this judgment. More specifically, when there is a presentation request from at least one presented information source 194, the presented information selection unit 150 refers to at least one of the item number 601 to the information type 603 of each record in the information presentation table 165, identifies a record with the same information as the presented information, which is presented upon the input presentation request, and acquires the required presentation amount 604 of this record. The presented information selection unit 150 compares this required presentation amount 604 with the margin; and when the required presentation amount 604 is smaller than the margin, the requested information can be presented.

Furthermore, when there are a plurality of presentation requests from the presented information source 194, the presented information selection unit 150 can acquire the required presentation amount 604 for each presentation request in the same manner as above, compare the smallest value of the plurality of acquired required presentation amounts 604 with the margin, and select whether the requested information can be presented or not. Under this circumstance, the smallest value of the required presentation amount 604 is information with higher emergency to be presented. Therefore, the information with higher emergency to be presented can be prioritized and presented by comparing the smallest value of the required presentation amount 604 with the margin.

However, the invention is not limited to the above-described example and, for example, each of the plurality of pieces of the presented information can be presented without duplication in accordance with specified conditions such as the value of the margin and no duplicate output devices for the respective presentation requests.

Next, the presented information selection unit 150 presents the presented information to be presented in response to the presentation request selected in S806 (S807). Therefore, the presented information selection unit 150, for example, outputs instructions, etc. to the presented information source 194 to which the presented information to be presented upon response to the presentation request selected in S806 should be presented. The presented information source 194 outputs the presented information in accordance with this instruction.

The information presentation apparatus 100 judges whether to terminate the processing or not (S808). This judgment may be made to terminate the processing, for example, when an information presentation terminating instruction is input or when the power of the information presentation apparatus 100 is turned off; however, the invention is not limited to this example. When the processing is to be not terminated as a result of the judgment in S808 (S808: no), the processing returns to S801 and the processing flow is resumed after a specified period of time. When the processing is to be terminated as a result of the judgment in S808, the processing flow terminates.

Incidentally, the case in which the presentation request is input from any one of the presented information sources 194 has been explained above, but the presentation request is not always input. When no presentation request is input from any of the presented information sources 194, the processing from S801 to S805 may be executed as described above and the processing may then proceed to S808 by skipping the processing in S806 and S807.

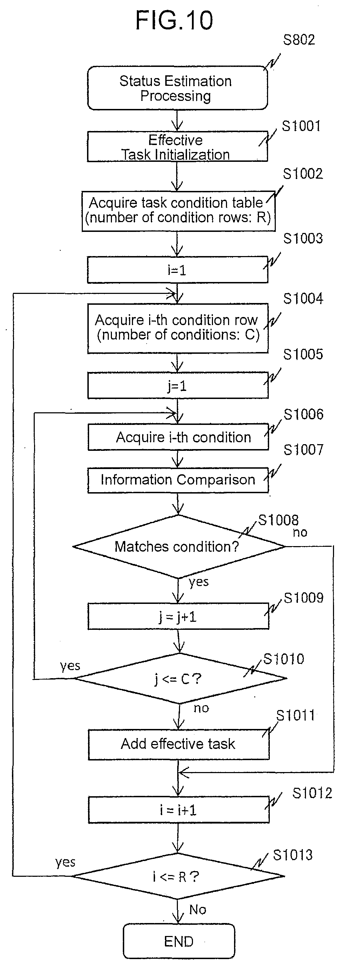

The status estimation processing (S802), the subtask estimation processing (S803), and the load calculation processing (S804) will be explained below in detail with reference to Fig. 10 to Fig. 14.

[Status Estimation Processing (S802)]

Fig. 10 is an example of a flowchart of the status estimation processing (S802). The status estimation unit 120 firstly initializes an effective task (S1001), acquires the task condition table 161, and sets the number of records in the task condition table 161 as a value of variable R (S1002). Next, the status estimation unit 120 initializes counter i to 1 (S1003). Furthermore, the status estimation unit 120 acquires the i-th record of the task condition table 161 and sets the number of input conditions (the number of the input conditions 204) included in this record as a value of variable C (S1004). The status estimation unit 120 initializes counter j (S1005) and acquires the j-th input condition (S1006). The status estimation unit 120 compares this input condition with the value of the relevant item from among the input information acquired in S801 (S1007) and judges whether the input information satisfies the j-th input condition or not (S1008). Referring to Fig. 2, this j-th input condition is, for example, the input condition 204a in a case of j = 1 or the input condition 204b in a case of j = 2.

When the input condition is not satisfied as a result of the judgment in S1008 (S1008: no), the processing proceeds to processing in S1012 described later. On the other hand, when the input condition is satisfied as a result of the judgment in S1008 (S1008: yes), the status estimation unit 120 increases j by setting j = j + 1 (S1009) and judges whether j is equal to or less than C ($j \leq C$) or not, that is, whether or not the above-mentioned judgment has been performed on all the input conditions for the i-th record (S1010). When j is equal to or less than C ($j \leq C$), that is, when the above-mentioned judgment has not been performed on all the input conditions as a result of the judgment in S1010 (S1010: yes), the status estimation unit 120 returns to the processing in S1006. When j is not equal to or less than C (j

≤ C), that is, when the above-mentioned judgment has been performed on all the input conditions S1010 as a result of the judgment in S1010 (S1010: no), the status estimation unit 120 determines that all the input conditions for the i-th record are satisfied and the task is effective and adds the task indicated by that record to the effective task group (S1011).

After the judgment in S1008 or after the processing in S1011, the status estimation unit 120 increases i by setting i = i + 1 (S1012) and judges whether i is equal to or less than R (i ≤ R) or not, that is, whether or not the above-mentioned processing has been executed on all the records in the task condition table 161 (S1013). When i is equal to or less than R (i ≤ R), that is, when the above-mentioned processing has not been executed on all the records as a result of the judgment in S1013 (S1013: yes), the status estimation unit 120 returns to the processing in S1004. When i is not equal to or less than R (i ≤ R), that is, when the above-mentioned processing has been executed on all the records as a result of the judgment in S1013 (S1013: no), the status estimation unit 120 terminates the status estimation processing.

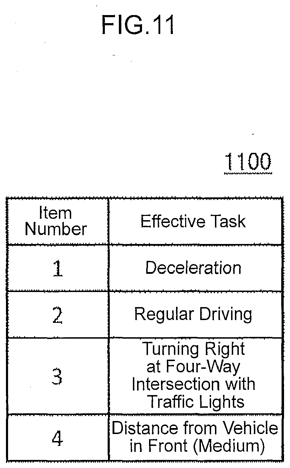

Fig. 11 is an example of the effective task group acquired as the result of the status estimation processing. In this example, tasks included in the effective task group are indicated with the task name 203 of the task condition table 161, but may be indicated with the task ID 201.

An effective task group 1100 shows that tasks of deceleration, regular driving, turning right at a four-way intersection with traffic lights, and the distance from a vehicle in front (medium) are effective. Specifically speaking, it shows that when turning right at a four-way intersection with traffic lights, a state of shifting from regular driving to deceleration and having the inter-vehicle distance from the vehicle in front almost reaching a medium level is detected.

Accordingly, in this embodiment, one or more tasks can be made effective simultaneously with respect to the input information at the same time or almost at the same time. As a result, an enormous amount of statuses which may actually happen can be explained with a combination of a limited number of tasks.

[Subtask Estimation Processing (S803)]

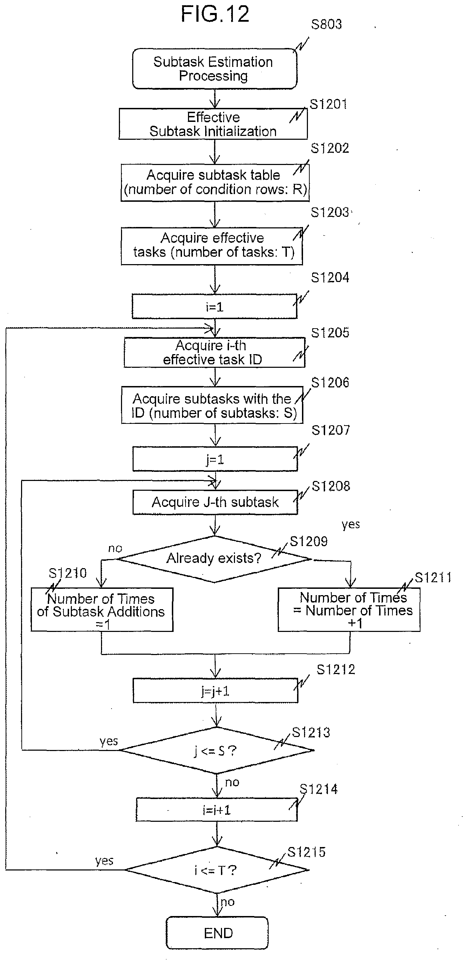

Fig. 12 is an example of a flowchart of the subtask estimation processing (S803). The load estimation unit 130 firstly initializes the effective subtask group (S1201) and acquires the subtask table 162 (S1202). The load estimation unit 130 acquires the effective task group transmitted from the status estimation unit 120 and sets the number of tasks included in the effective task group as a value of variable T (S1203). Next, the load estimation unit 130 initializes the counter i, that is, sets i=1 (S1204). Subsequently, the load estimation unit 130 acquires the i-th task from the effective task group (S1205). The load estimation unit 130 acquires all subtasks defined for the i-th task from the subtask table 162 and sets the number of subtasks as a value of variable S (S1206). For that purpose, the load estimation unit 130: identifies one record including at least either one of the task ID 301 and the task name 303 that match the i-th task from among records in the subtask table 162; and acquires all the subtasks 304 of this record.

The load estimation unit 130 initializes the counter j to 1, that is, sets j = 1 (S1207). Next, the load estimation unit 130 acquires the j-th subtask from among the subtasks acquired in S1206 (S1208) and judges whether the same subtask is included in the effective subtask group or not (S1209). When the same subtask is not included in the effective subtask group as a result of the judgment in S1209 (S1209: no), the load estimation unit 130 adds the j-th subtask to the effective subtask group and sets the number of times, which is the number of times that subtask is made effective, to 1, that is, sets the number of times = 1 (S1210). On the other hand, when the same subtask is included in the effective subtask group as a result of the judgment in S1209 (S1209: yes), the load estimation unit 130 increments the number of times of the j-th subtask, that is, sets the number of times = the number of times +1 (S1211).

After S1210 or S1211, the load estimation unit 130 sets j = j + 1 (S1212) and judges whether all subtasks defined for the i-th task have been acquired or not, that is, whether j is equal to or less than S (j ≤ S) or not (S1213). When j is equal to or less than S (j ≤ S), that is, all the subtasks have not been acquired as a result of the judgment in S1213 (S1213: yes), the load estimation unit 130 proceeds to the processing in S1208. On the other hand, when j is not equal to or less than S (j ≤ S), that is, all the subtasks have been acquired as a result of the judgment in S1213 (S1213: no), the load estimation unit 130 sets i = i + 1 (S1214) and judges whether the aforementioned processing has been executed on all the tasks or not, that is, whether i is equal to or less than T (i ≤ T) or not (S1215). When i is equal to or less than T (i ≤ T), that is, the aforementioned processing has not been executed on all the tasks as a result of the judgment in S1215 (S1215: yes), the load estimation unit 130 proceeds to the processing in S1205. On the other hand, when i is not equal to or less than T (i ≤ T), that is, the aforementioned processing has been executed on all the tasks as a result of the judgment in S1215 (S1215: no), the subtask estimation processing is terminated.

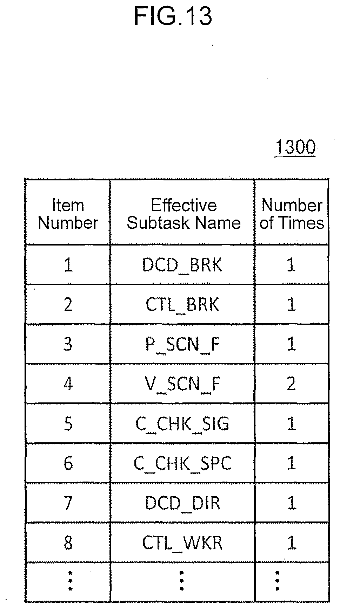

Fig. 13 is an example of the effective subtask group generated by the subtask estimation processing. An effective subtask group 1300 includes the number of times each subtask is made effective as indicated in the drawing. Incidentally, in this example, the subtasks included in the effective subtask group are indicated with the subtask name 403 of the required subtask amount table 163, but may be indicated with the subtask ID 401.

The effective subtask group 1300 shows that, for example, subtasks of "DCD_BRK (brake judgment)," "CTL_BRK (brake operation)," "P_SCN_F (pedestrian scan (front))" are effective. Specifically speaking, it is possible to assume that a driver who is the operator is requested to perform these subtasks in the current status and the mental load caused by these subtasks would be imposed on the driver.

Accordingly, in this embodiment, one or more subtasks can be defined by one task. Each of the subtasks can be defined as, for example, work performed by a person like the operator who makes decisions to move the mobile object. There are a limited number of such works, so that they can be predicted to a certain extent. Therefore, the mental load in the enormous amount of statuses which may actually happen can be calculated by a combination of a limited number of subtasks.

[Load Calculation Processing (S804)]

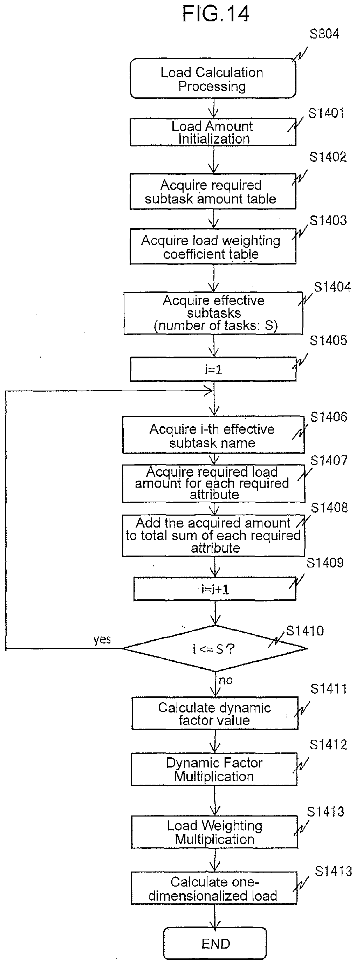

Fig. 14 is an example of a flowchart of the load calculation processing (S804). Firstly, the load estimation unit 130 initializes a total sum value TV, TA, TC, TP of each required load attribute which is a load amount to be output (S1401), acquires the required subtask amount table 163 (S1402), and further acquires the load weighting table 164 (S1403). Next, the load estimation unit 130 acquires the effective subtask group and sets the number of subtasks included in the effective subtask group as a value of variable S (S1404).

Next, the load estimation unit 130 initializes the counter i to 1 (S1405). The load estimation unit 130 acquires the i-th subtask from the effective subtask group (S1406). Then, the load estimation unit 130 acquires the required load amount of each required attribute from the required subtask amount table 163 (S1407), and adds it to the total sum of the required load amount of each required attribute (S1408).

The processing in S1407 and S1408 will be explained. As the processing in S1407, the load estimation unit 130: identifies a record including at least either one of the subtask ID 401 and the subtask name 403 which match the i-th subtask from among records in the required subtask amount table 163; and acquires all the required load amounts 404 (for example, the required load amount 404a to the required load amount 404e indicated in Fig. 4) of this record. Next, the load estimation unit 130 adds them to the total sum of the required load amount of each required attribute.

Under this circumstance, the load estimation unit 130 indicates the total sum of the required load amount by using a vector having Y pieces of variables which are the number of types of the required attributes. More specifically, for example, regarding the i-th subtask, the required load amounts acquired by the processing in S1407 are $v_i$, $a_i$, $c_i$, $p_i$, respectively, for visual requirement V, hearing requirement A, recognition/judgment requirement C, and mental operation requirement P acquired from the required subtask amount table 163, where the load estimation unit 130 calculates the total sum values TV, TA, TC, TP of the respective required load attributes. Specifically speaking, in S1408, the required load amounts are added to the respective total sum values as follows: $TV = TV + v_i$, $TA = TA + a_i$, $TC = TC + c_i$, and $Tp = Tp + p_i$.

Next, the load estimation unit 130 increments the counter i and sets $i = i + 1$ (S1409) and judges whether the aforementioned processing has been executed on all the subtasks or not, that is, whether i is equal to or less than S ($i \leq S$) or not (S1410). When i is equal to or less than S ($i \leq S$), that is, the aforementioned processing has not been executed on all the subtasks as a result of the judgment in S1410 (S1410: yes), the processing returns to S1406. On the other hand, when i is not equal to or less than S ($i \leq S$), that is, the aforementioned processing has been executed on all the subtasks as a result of the judgment in S1410 (S1410: no), the load estimation unit 130 calculates a dynamic factor value (S1411) and multiplies the dynamic factor value by each of the required load amounts calculated in S1408 (S1412).

Under this circumstance, the dynamic factor value in S1411 is a value indicative of the mental load in the status relevant to the task belonging to the "dynamic factor" in the category 202 of the task condition table 161. In order to calculate the dynamic factor value, the load estimation unit 130 or another unit of the information presentation apparatus 100 judges whether the current status corresponds to any of dynamic factors, on the basis of the input information; and when the current status corresponds to any of the dynamic factors, a function and constants which are defined for each task belonging to the relevant dynamic factor are acquired and used for calculation. More specifically, for example, the load estimation unit 130 judges whether the current status corresponds to the dynamic factor of the task name 203 "Speed and Distance Between Vehicles," on the basis of the input condition 204 of the task condition table 161 in Fig. 2 and the input information; and when the current status corresponds to such dynamic factor, the dynamic factor value may be calculated based on a function $f(v, x)$ where the speed and the distance between vehicles are variables.

Lastly, the load estimation unit 130 acquires a coefficient of each required attribute from the load weighting table 164 and multiplies the coefficient by the required load amount of each required attribute (S1413), and adds a constant term acquired from the load weighting table 164 to all the above-obtained total sums, thereby calculating a one-dimensionalized load amount (S1414). Under this circumstance, the coefficient of each required attribute which is acquired from the load weighting table 164 is, for example, "0.6" or "0.2" which is a value of the weighting coefficient 503 corresponding to each of the "visual requirement," the "hearing requirement," etc. in the requirement name 502, an example of which is illustrated in Fig. 5. Furthermore, the constant term acquired from the load weighting table 164 is, for example, "22.1" which is a value of the weighting coefficient 503 corresponding to the "constant term" in the requirement name 502, an example of which is illustrated in Fig. 5. Specifically speaking, for example, assuming that the respective coefficients of the visual requirement V, the hearing requirement A, the recognition/judgment requirement C, and the mental operation requirement P acquired from the load weighting table 164 are wV, wA, wC, wP and the constant term acquired from the load weighting table 164 is wδ, the load estimation unit 130 calculates the one-dimensionalized load amount L as follows.

[Math. 1]

$$L = w_v T_V + w_a T_A + w_c T_C + w_p T_P + w_\delta$$

Incidentally, TV, TA, TC, and TP are the total sum values of the respective required load attributes calculated by the processing in S1408 which is executed until S1414. Furthermore, this expression does not indicate anything about the dynamic factor, but the value of the above-mentioned entire expression may be multiplied by the value of the dynamic factor calculated according to the function f(v, x), where the aforementioned speed and distance between vehicles are variables, or each term may be separately multiplied by the dynamic factor calculated as the value for each required load attribute.

Under this circumstance, the number of times the relevant subtask is made effective (for example, the number of times of the effective subtask group 1300 as illustrated in Fig. 13) may be used, or may not be used, for the calculation of the one-dimensionalized load amount. For example, when a plurality of tasks including the task "Approaching to Vehicle in Front (Short)" are made effective and when the subtask "CTL_BRK (brake operation)" is made effective twice or more, it doesn't necessarily mean that the mental load corresponding to performing the brake operation twice or more would be imposed on the operator, and it is assumed that the same mental load as that of performing the brake operation once would be imposed. In a case like this, the number of times the relevant subtask is made effective may not be used to calculate the one-dimensionalized load amount.

Furthermore, for example, when tasks including the tasks "Backlight" and "Detecting Humans" are made effective and when the subtask "P_SCN_F (pedestrian scan (front))" is made effective twice or more, it is assumed that the mental load corresponding to two or more pedestrian scans, that is, the pedestrian scan in the status of "Backlight" and the pedestrian scan in the status of "Detecting Humans," would be imposed on the operator. In a case like this, the number of times the relevant subtask is made effective may be used to calculate the one-dimensionalized load amount. Whether or not the number of times should be used for the calculation of the one-dimensionalized load amount may be determined on the basis of at least either one of at least some of the tasks included in the effective task group and at least some of the subtasks included in the effective subtask group. When the number of times is used for the calculation of the one-dimensionalized load amount, for example, the number of times may be multiplied by each of the values of all the required attributes.

An example of the load calculation processing has been explained above. The load amount which are calculated by the aforementioned processing and the one-dimensionalized load amount may be stored for a specified period of time and a value equalized by the publicly-known technique such as a moving average may be a final output value. Furthermore, a value obtained by executing threshold value processing and causing discretization into a plurality of rank levels may be an output value.

[Display Screen Examples]

Now, an example of the presented information which is output in S807 will be explained. In the following description, an explanation will be given about an example of displaying the presented information on a display device provided on an instrument panel or the like, or on a screen such as a display area; however, the presentation of the presented information is not limited to this example and an output device for outputting the presented information is arbitrary.

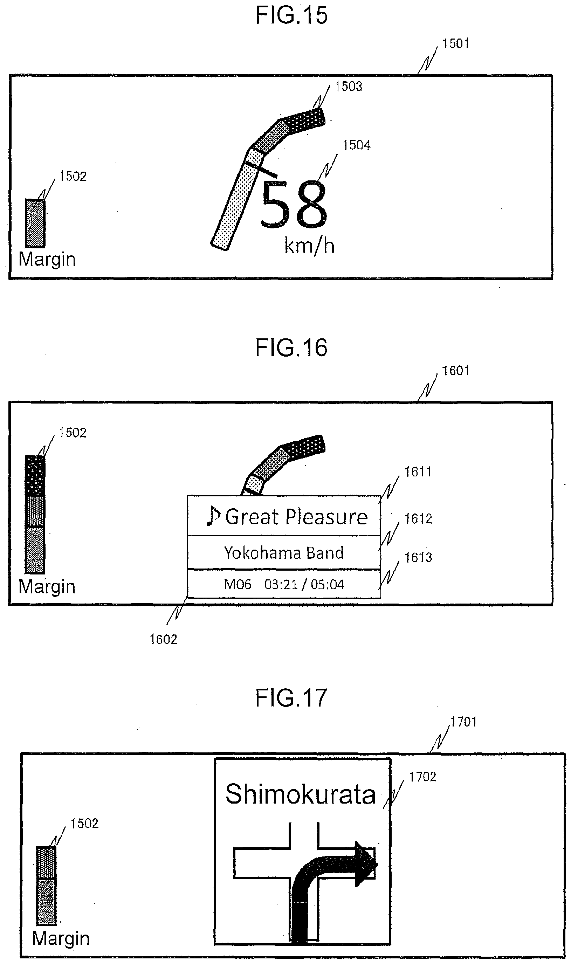

Fig. 15 is an example of a screen in a case where no presentation request is input from any of the presented information sources 194. A screen 1501 includes a graph 1502, an engine speed 1503, and a speed 1504. The graph 1502 indicates the margin calculated by the aforementioned processing. The engine speed 1503 indicates an engine rpm of the relevant vehicle. The speed 1504 indicates a traveling speed of the vehicle. The speed and the engine speed may be input from any of the external information sources 191.

Fig. 16 is an example of a screen in a case where a presentation request is input from the presented information source 194 which is a music player. This example shows a case where while the screen 1501 is displayed, the presentation request is input, the aforementioned processing calculates the margin as approximately 80 and the required presentation amount as 70, and the required presented information is presented.

A screen 1601 includes music information 1602 in addition to the graph 1502, the engine speed 1503, and the speed 1504 (however, at least part of the engine speed 1503 and the speed 1504 is not shown). The music information 1602 includes album name information 1611, artist name information 1612, and music information 1613 such as a track number and a replay position.

Fig. 17 is an example of a screen when a presentation request is input from the presented information source 194 which is a navigation system. This example shows a case where a presentation request for an enlarged intersection view is input, the aforementioned processing calculates the margin as approximately 60 and the required presentation amount as 50, and the required presented information is presented.

A screen 1701 includes an enlarged intersection view 1702 in addition to the graph 1502. Furthermore, the screen 1701 may include the engine speed 1503 and the speed 1504, which are not indicated in the drawing, in addition to the information mentioned above.

For example, in the status where the margin is 60 and when there is the presentation request for the enlarged intersection view from the presented information source 194 which is the navigation system, and at the same time there is also the presentation request from the presented information source 194 which is the music player, information cannot be presented in response to the presentation request from the music player. The first reason is that the margin is approximately 60 and the required presentation amount of the presentation request from the music player is 70, so that the margin is not sufficient enough to present the information in response to the presentation request from the music player. The second reason is that the required presentation amount for the presentation request from the navigation system is 50, while the required presentation amount for the presentation request from the music player is 70; and, therefore, the presentation request from the navigation system has a higher emergency level.

Furthermore, as another example, when there is the presentation request for the enlarged intersection view from the presented information source 194 which is the navigation system, and at the same time when there is another presentation request where the required presentation amount is 55, information cannot be presented in response to the other presentation request. This is because the margin is approximately 60 and the required presentation amount for the other presentation request is 55, so that the margin is sufficient enough; however, the required presentation amount for the presentation request from the navigation system is 50 and the required presentation amount for the other presentation request is 55, so that the presentation request from the navigation system has a higher emergency level to present the information.

Incidentally, when there are a plurality of presentation requests, at the same time, which satisfy the conditions for the margin as described above, one of the required presentation amounts may be selected to present information, and then another required presentation amount may be selected to present information. Specifically speaking, for example, in the aforementioned example, information in response to another presentation request may be presented after finishing presenting the enlarged intersection view. In order to make this possible, the presented information selection unit 150 may, for example, list up presentation requests in ascending order of the required presentation amounts and control the presentation of information so that the information will be presented sequentially according to the list after termination of presentation of certain information. The presented information selection unit 150 may control presentation time of the presented information, for example, in accordance with rules defined by the presentation time 605 of the information presentation table 165.

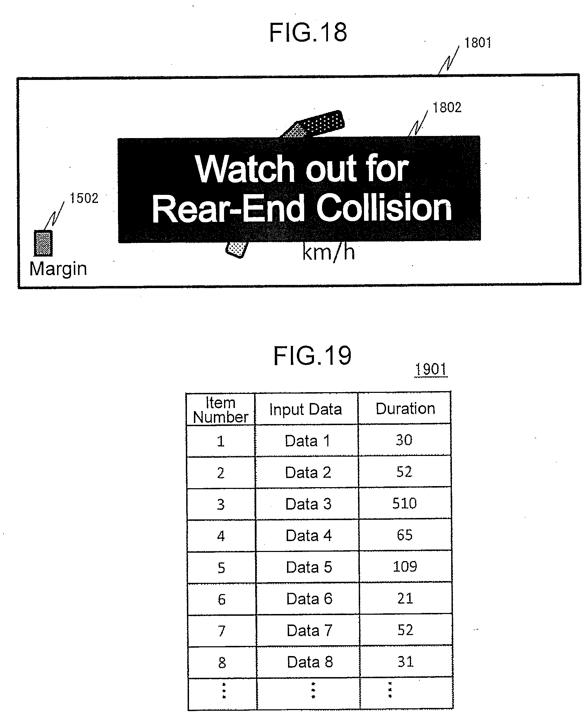

Fig. 18 is an example of a screen in a case where a presentation request is input from the presented information source 194 which is ADAS. This example shows a case where a presentation request for a warning of a collision with a vehicle in front is input, the aforementioned processing calculates the margin as 10 and the required presentation amount as 0, and the required information is presented.

A screen 1801 includes a warning 1802 of a collision with a vehicle in front in addition to the graph 1502. The margin is approximately 10, which is very low, but the required presentation amount for the warning of a collision with a vehicle in front is 0 as described above; and, therefore, this information is presented.

Accordingly, information with a very high emergency level to be presented can be presented in whatever status of the margin by setting a possible range of the margin to be very low. In this example, the range of the margin is set as 0 to 100, so that the information can be presented with certainty by setting the required presentation amount as 0 or a negative value. Furthermore, in this way, the priority of presentation can be set higher than other information. Such presentation is useful particularly when it is used to present alarm-type information such as collision alarms.

[Chronological Input Information]

The input information from the external information source 191 may be values at specified timing, but may include the time information and acquired as chronological information.

Fig. 19 is an example of the input information acquired as the chronological information. Chronological input information 1901 shows an example where the input information is indicated as ON or OFF at a certain point in time. More specifically, this will be explained by taking item number 1 and item number 2 as examples, which show that after a certain information value continues to be ON (or OFF) for 30 unit times (for example, milli seconds), it continues to be OFF (or ON) for 52 unit times.

However, the input information which is input as the chronological information is not limited to that illustrated in Fig. 19. The input information may be, for example, time and a value at that time. Furthermore, the format is not limited to that illustrated in Fig. 19. Furthermore, the chronological input information may be generated by each external information source 191 or external equipment which is not illustrated in the drawing, or may be generated by the information acquisition unit 110. When the information acquisition unit 110 or the external equipment generates the chronological input information, the information acquisition unit 110 or the external equipment may retain values of the input information, which are acquired from the external information source 191 at specified timings, for a specified period of time and put together the retained values of the input information at the respective timings to form the chronological information.

Each of the status estimation unit 120, the load estimation unit 130, and the margin estimation unit 140 executes the aforementioned processing by using the value of the input information at each point in time. Therefore, what is calculated by the margin estimation unit 140 is chronological margins.

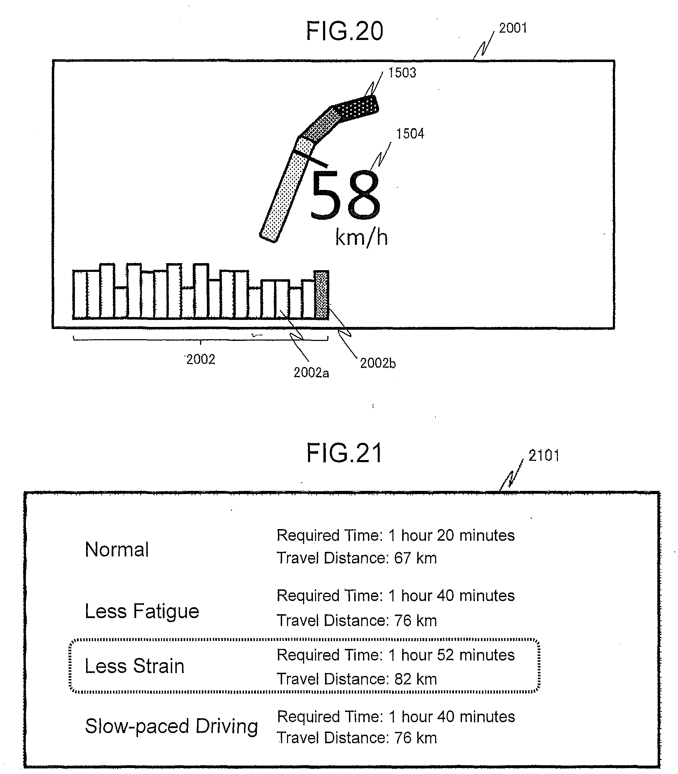

Fig. 20 is an example of a screen for displaying the chronological margins. A screen 2001 includes a graph 2002, an engine speed 1503, and a speed 1504. The graph 2002 indicates chronological margins calculated by the aforementioned processing. A display mode of bars representing past margins (for example, bars 2002a) from among a plurality of bars which constitute the graph 2002 may be designed to be different from that of a bar representing a current margin (for example, a bar 2002b). The display modes are made different from each other, for example, by changing colors or making the relevant bar blink on and off; however, how to make the display modes different from each other is not limited to these examples. By doing so, the operator can easily recognize chronological changes of the margin.

Incidentally, the chronological margins may be calculated when the input information is chronological as mentioned above; however, even if the input information is not chronological, time information about time when the relevant margin is calculated can be retained together with the margin, so that such time information and margins can be considered as chronological margins.

[Application of Margin to Presented Information]

The content of the presented information to be presented in response to a presentation request may be selected and output according to the chronological margins. A specific example may be configured so that if the presented information is pathway guidance information of the navigation system, a search for pathways will be made in accordance with the preference of the driver, who is the operator, for the margin.

Fig. 21 is an example of a screen for setting the driver's preference for the margin regarding a pathway to guide them. A screen 2101 illustrates an example where one of "Normal," "Less Fatigue," "Less Strain," and "Slow-Paced Driving" can be selected as the preference for the margin. Incidentally, regarding the preference for the margin, the example where any one of the four types can be set is explained here; however, the preference for the margin is not limited to this example. Furthermore, the screen 2101 further includes predicted required time and a travel distance for each type; however, values which are calculated by the navigation system and correspond to a pathway selected by processing described later may be displayed as the predicted required time and the travel distance.

"Normal" is a mode to search for a pathway without considering the margin. "Less Fatigue" is a mode to search for a pathway with a relatively large margin in consideration of overall pathways. "Less Strain" is a mode to search for a pathway with a relatively small value of dip (acute reduction) in the margin. "Slow-Paced Driving" is a mode to search for a pathway with a relatively small number of times of dips in the margin.

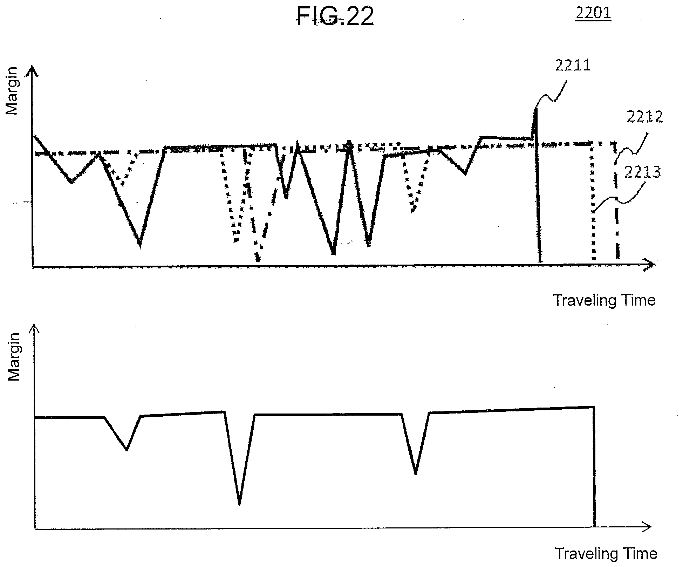

The margin upon moving will be explained in detail. Fig. 22 illustrates transitions of the margin upon moving. Regarding a graph 2201, a horizontal axis represents traveling time and a vertical axis represents the margin. A line 2211 represents an example of the transitions of the margin with respect to a pathway in the aforementioned "Normal" mode, that is, the mode in which the pathway is not set according to the margin. A line 2212 represents an example of transitions of the margin with respect to a pathway in the aforementioned "Less Fatigue" mode, that is, with respect to a pathway whose margin is relatively large in consideration of overall pathways. Incidentally, this example shows that the line 2212 indicates the same transitions of the margin with respect to a pathway in the aforementioned "Slow-Paced Driving" mode, that is, a pathway with a relatively small number of times of dips in the margin. A line 2113 represents an example of transitions of the margin with respect to a pathway in the aforementioned "Less Strain" mode, that is, a pathway with comparatively small values of dips of the margin.

In order to identify each pathway as illustrated in the graph 2201, the margin estimation unit 140 may calculate the margin with respect to a plurality of candidate pathways acquired by the presented information source 194 such as the navigation system by means of a publicly-known technique such as Dijkstra's algorithm. The margin estimation unit 140 identifies a plurality of locations where vehicles assumed to exist (various information including, for example, nodes, links, and whether traffic lights exist or not) with respect to each candidate pathway in order to calculate the margin and judges whether or not each of the locations corresponds to at least any one of tasks belonging to the category 202 "Location Task" of the task condition table 161; and if the relevant candidate pathway corresponds to any one of tasks, the margin may be calculated by identifying a subtask by means of the same processing as the aforementioned processing. The locations identified here may be locations assumed to have vehicles existing at each specified time on the candidate pathways or specified types of locations existing on the candidate pathways (for example, intersections, junctions, and any points between them). Furthermore, the traveling time at the location identified here may be acquired, for example, by means of publicly known pathway search techniques.

Furthermore, the margin estimation unit 140 may calculate the margin in consideration of whether each of locations of roads constituting the candidate pathways corresponds to any one of tasks belonging to the category 202 "Physical Task" or whether each of such locations corresponds to any one of tasks belonging to the category 202 "Dynamic Factor" in the same manner as described above.

Furthermore, the margin estimation unit 140 may calculate the margin in consideration of whether each of such locations corresponds to any one of tasks belonging to the category 202 "Driving Task" in the same manner as described above on the basis of past history, behavior patterns generally predicted with respect to the driver, and so on.

The margin estimation unit 140 may determine, for example, a pathway with a maximum integral value obtained by integrating the margin with the traveling time from among a plurality of candidate pathways, to be a pathway in the "Less Fatigue" mode. The integral value obtained by integrating the margin with the traveling time is, for example, an area defined by the vertical axis and the horizontal axis of the line 2211.

Furthermore, when a dip of the margin occurs, the margin estimation unit 140 may determine, for example, a pathway with the highest minimum value of the margin at the dip which has occurred (dip value), from among the plurality of candidate pathways, to be a pathway in the "Less Strain" mode. Regarding whether the dip in the margin has occurred or not, for example, when a reduced amount of the margin within a specified amount of time is equal to or more than a specified threshold value (or more than the specified threshold value) or when the margin itself becomes equal to or less than the specified threshold value (or less than the threshold value), it may be judged that the dip has occurred. When the dip has occurred a plurality of times, the margin estimation unit 140 may select any one of pathways on the basis of at least either one of the dip value and the number of times of occurrence.

Furthermore, when the dip in the margin has occurred, the margin estimation unit 140 may determine, for example, a pathway with a smallest number of times of occurrence of the dip in the margin, from among the plurality of candidate pathways, to be a pathway in the "Slow-Paced Driving" mode. The same judgment may be performed in order to judge whether the dip in the margin has occurred or not. When the dip has occurred a plurality of times, the margin estimation unit 140 may select any one of pathways on the basis of at least either one of the dip value and the number of times of occurrence.

The navigation system displays information and performs guidance in accordance with the selected pathway. Since the display and the guidance themselves are the same as the publicly known techniques and the aforementioned display, any explanation about them has been omitted. Accordingly, information presentation suited for the operator's preference or aptitude can be implemented.

[Information Presentation According to Margin]

The presented information selection unit 150 selects information to be presented according to the value of the margin as explained above. The selection of the presented information by the presented information selection unit 150 may be configured so that the information to be presented is selected according to not only the value of the margin itself, but also at least one of the aforementioned integral value obtained by integrating the margin with the traveling time, the dip value, and the number of times the dip has occurred.

[Creation and Updating of Tables]

The tables stored in the storage unit 160 can be created and updated (changed and deleted) at any desired timing as described earlier. Since the mental load can be defined by the tasks and the subtasks as described earlier in this embodiment, the maintenance and management can be performed flexibly. Now, as an example, creation and updating of each of the task condition table 161, the subtask table 162, and the required subtask amount table 163 will be explained. Each table can be created and updated by using, for example, the computer 193.

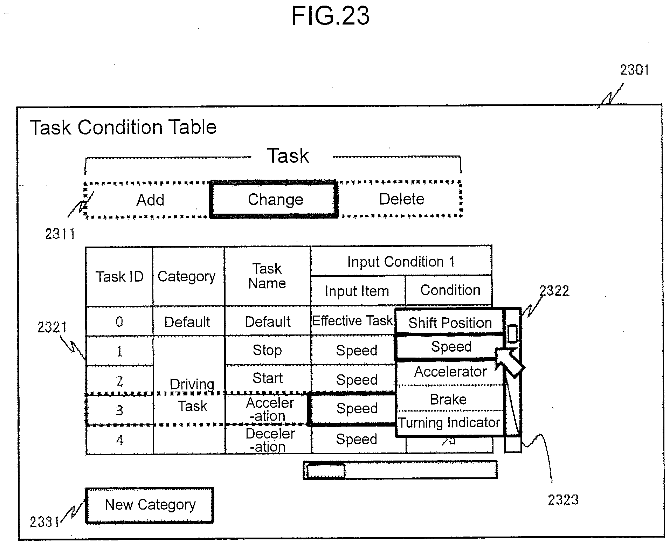

Fig. 23 illustrates an example of a screen for creating and updating the task condition table 161. Incidentally, Fig. 23 illustrates an example where information about tasks is to be changed; however, it is also possible to not only change the information, but also add or delete information.

A screen 2301 includes an area 2311, an area 2321, and so on. The area 2311 is an area for the user to designate any one of an addition, a change, or a deletion of information about a task by using the input device. The area 2321 is an area to input the content of the addition, change, or deletion of information about the task. As mentioned earlier, the change is selected in this example, so that information of each already existing record of the task condition table 161 is displayed in the area 2321. The user uses the input device and selects items relating to the task to be changed (for example, the category, the task name, the input condition [the input item and the condition], etc.). Fig. 23 illustrates an example where the type of the input condition is selected. After selecting the item to be changed in this manner, the user inputs a value to be changed. In this example, the input item of the input condition is selected, so that a list of items which can be selected as the input items is displayed and controlled. An area 2322 on the screen 2301 shows an example where the list of items which can be selected as the input items is displayed. The user selects any one of the input items from the area 2322 by using the input device. The computer 193 registers the selected input item, as a new input item of the input condition for the selected task, in the task condition table 161.

Furthermore, for example, a value of an item to be changed can be input freely. For example, when the condition of the input condition is selected as the item to be changed, the value of the item to be changed may be input to an area corresponding to an item selected from among a plurality of areas included in the area 2321 or an input area which is separately displayed. Furthermore, for example, when a new category is to be added, the user may press down a button 2331 by using the input device and freely input, for example, a category name to be added to a specified area. The computer 193 registers the input information in the task condition table 161.

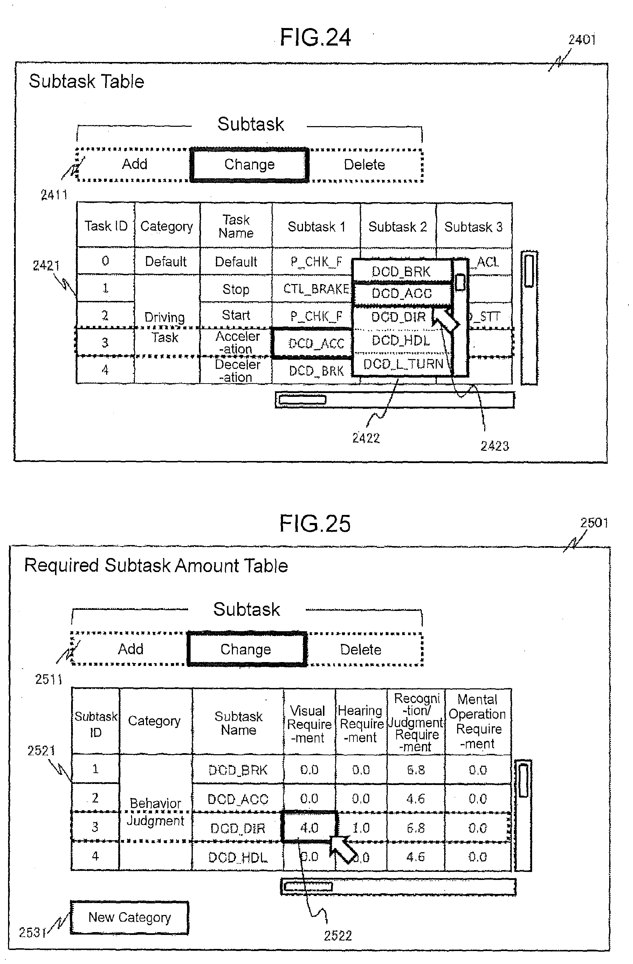

Fig. 24 illustrates an example of a screen for creating and updating the subtask table 162. Incidentally, Fig. 24 illustrates an example where information about subtasks is to be changed; however, it is also possible to not only change the information, but also add or delete information.

A screen 2401 includes an area 2411, an area 2421, and so on. The area 2411 is an area for the user to designate any one of an addition, a change, or a deletion of information about a subtask by using the input device. The area 2421 is an area to input the content of the addition, change, or deletion of information about the subtask. As mentioned earlier, the change is selected in this example, so that information of each already existing record of the subtask condition table 161 is displayed in the area 2421. The user uses the input device and selects items relating to the subtask to be changed (for example, the category, the subtask name, and the subtask). Fig. 24 illustrates an example where the item "subtask" is selected. After selecting the item to be changed in this manner, the user inputs a value to be changed. This example shows that the "subtask" is selected, so that a list of subtasks which can be changed is displayed and controlled. An area 2422 on the screen 2401 shows an example where the list of subtasks which can be changed is displayed. The user selects any one of the subtasks from the area 2422 by using the input device. The computer 193 registers the selected subtask, as a subtask corresponding to the selected task, in the subtask table 162.

Fig. 25 illustrates an example of a screen for creating and updating the required subtask amount table 163. Incidentally, Fig. 25 illustrates an example where information about the required presentation amount of a subtask is to be changed; however, it is also possible to not only change the information, but also add or delete information.

A screen 2501 includes an area 2511, an area 2521, and so on. The area 2511 is an area for the user to designate any one of an addition, a change, or a deletion of information about the required presentation amount by using the input device. The area 2521 is an area to input the content of the addition, change, or deletion of information about the required presentation amount. As mentioned earlier, the change is selected in this example, so that information of each already existing record of the required subtask amount table 163 is displayed in the area 2521. The user uses the input device and selects items relating to the required load amount to be changed (for example, the category, the subtask name, the required attributes, etc.). Fig. 25 illustrates an example where a required attribute of the "Visual Requirement" is selected. After selecting the item to be changed in this manner, the user inputs a value to be changed. This example shows that the required attribute is selected, so that a value of the required attribute can be input to the area 2522 by the user by using the input device. The computer 193 registers the input value, as the required load amount of the selected required attribute, in the required subtask amount table 163.

Furthermore, for example, when a new category is to be added, the user may press down a button 2531 by using the input device and freely input, for example, a category name to be added to a specified area. The computer 193 registers the input information in the required subtask amount table 163.

Each of the tables created and updated as described above is input to the information presentation apparatus 100 and stored in the storage unit 160 at arbitrary timing via the communications network or the I/F or by reading data stored in a portable storage medium.

[Load Weighting Table]

The load weighting table 164 is used for corrections (S1413) after performing dynamic factor multiplication (S1412) during the load calculation processing (S804 in Fig. 8 and Fig. 14) by the load estimation unit 130 as described earlier. Its purpose is to perform scaling to make the value of the required load calculated by using the plurality of tasks, the plurality of subtasks, and the dynamic factor, which will be explained here, approximate to the mental load of a behavior which the operator is feeling in the real world.

In this explanation, L represents the value of WL which the operator actually feels; and among such feelings, Li represents the WL value measured in a certain work status i. Furthermore, L'i represents the aforementioned one-dimensionalized load amount (calculated mental load amount) in the certain work status i. The WL value Li and the one-dimensionalized load amount L'i do not necessarily precisely match each other and a weight value and a constant term to calculate the one-dimensionalized load amount L'i are set to approximate to the WL value Li.

The one-dimensionalized load amount L'i is calculated by using a multivariate regression model indicated in Math. 2. Incidentally, regarding this expression, the required attributes of the aforementioned mental load will be explained as having the following four types: visual requirement V, hearing requirement A, recognition/judgment requirement C, and mental operation requirement P. Furthermore, required load amounts of the visual requirement V, the hearing requirement A, the recognition/judgment requirement C, and the mental operation requirement P after performing the dynamic factor multiplication (S1412) are Vi, Ai, Ci, and Pi, respectively. Furthermore, weight values of the visual requirement V, the hearing requirement A, the recognition/judgment requirement C, and the mental operation requirement P acquired from the load weighting table are wv, wa, wc, and wp, respectively, and a constant term is wδ.

[Math.2]

$$L'_i = w_v V + w_a A + w_c C + w_p P + w_\delta$$

Regarding this one-dimensionalized load amount L'i, the weight values wv, wa, wc, wp for approximating to the WL value Li which the operator actually feels, and the constant term wδ can be calculated by using, for example, the least-squares method. As an example of such method, an explanation will be given about measuring the WL value which the operator feels in some work statuses by using the NASA-TLX method, that is, a method for measuring WL by means of a subjective index which is used for many techniques. The NASA-TLX method is to ask the operator about scores relating to six evaluation axes and significance between combinations of every two evaluation axes and thereby calculate the WL value ranging from 0 to 100.

Under this circumstance, square error E between the WL value Li in the i-th status and the respective required load amounts Vi, Ai, Ci, Pi of the visual requirement V, the hearing requirement A, the recognition/judgment requirement C, and the mental operation requirement P is calculated as Math. 3.

[Math. 3]

$$E = \sum_{i=1}^{N} \left\{ L_i - \left( w_v V_i + w_a A_i + w_c C_i + w_p P_i + w_\delta \right) \right\}^2$$

When partial differentiation of the square error E using each of the weight values wv, wa, wc, wp and wδ and its solution value is set to 0 in order to minimize the square error E, the following expressions Math. 4 to Math. 8 are obtained.

[Math. 4]

$$\frac{\partial E}{\partial w_v} = -2 \sum_{i=1}^{N} V_i \left\{ L_i - \left( w_v V_i + w_a A_i + w_c C_i + w_p P_i + w_\delta \right) \right\} = 0$$

[Math. 5]

$$\frac{\partial E}{\partial w_a} = -2\sum_{i=1}^{N} A_i\{L_i - (w_v V_i + w_a A_i + w_c C_i + w_p P_i + w_\delta)\} = 0$$

[Math. 6]

$$\frac{\partial E}{\partial w_c} = -2\sum_{i=1}^{N} C_i\{L_i - (w_v V_i + w_a A_i + w_c C_i + w_p P_i + w_\delta)\} = 0$$

[Math. 7]

$$\frac{\partial E}{\partial w_p} = -2\sum_{i=1}^{N} P_i\{L_i - (w_v V_i + w_a A_i + w_c C_i + w_p P_i + w_\delta)\} = 0$$

[Math. 8]

$$\frac{\partial E}{\partial w_\delta} = -2\sum_{i=1}^{N} \{L_i - (w_v V_i + w_a A_i + w_c C_i + w_p P_i + w_\delta)\} = 0$$

When the above-described expressions Math. 4 to Math. 8 are organized and satisfied simultaneously to form a determinant, the weight values wv, wA, wC, wP, and wδ which are to be formed can be expressed as Math. 9 using an inverse matrix.

[Math. 9]

$$\begin{pmatrix} w_v \\ w_a \\ w_c \\ w_p \\ w_\delta \end{pmatrix} = \begin{pmatrix} \sum V_i^2 & \sum V_i A_i & \sum V_i C_i & \sum V_i P_i & \sum V_i \\ \sum V_i A_i & \sum A_i^2 & \sum A_i C_i & \sum A_i P_i & \sum A_i \\ \sum V_i C_i & \sum A_i C_i & \sum C_i^2 & \sum C_i P_i & \sum C_i \\ \sum V_i P_i & \sum A_i P_i & \sum C_i P_i & \sum P_i^2 & \sum P_i \\ \sum V_i & \sum A_i & \sum C_i & \sum P_i & N \end{pmatrix}^{-1} \begin{pmatrix} \sum V_i L_i \\ \sum A_i L_i \\ \sum C_i L_i \\ \sum P_i L_i \\ \sum L_i \end{pmatrix}$$

$$\text{where,}\ \sum\ =\ \sum_{i=1}^{N}$$

As a result, the weight values wv, wa, wc, wp, and wδ which are the respective elements of the load weighting table 164 can be calculated by observing the value Li of WL which the operator actually feels, and the respective required load amounts Vi, Ai, Ci, Pi then obtained after the dynamic factor multiplication (S1412) by the load estimation unit in some statuses.

Incidentally, the required attributes are not limited to those mentioned above and arbitrary attributes can be included and the number of required attributes is not limited. The respective load weights can be calculated in the same manner as described above regardless of whatever types of the required attributes they are. Furthermore, the calculation of the load weights is not limited to the above-described least-squares method and the load weights may be calculated by means of, for example, other numerical analysis methods such as the nonlinear least squares method, the steepest descent method, and Newton's method. Furthermore, the aforementioned multiple regression equation of Math. 1 is one example and, for example, dimensions of the value of each required attribute and expressions by means of exponential function equations can be selected as appropriate. Furthermore, applications such as the use of probability models and statistical numerical values other than the analytical models as described above are not precluded.

Furthermore, the method for measuring the value of WL which the operator feels is not limited to the aforementioned NASA-TLX method and may be selected from many methods such as methods for measuring the WL value by means of subjective indexes such as the SWAT method and the DALI method, an occlusion method, or methods for measuring numerical values having a high correlation with the mental WL by using biogenic indexes such as a heart rate.

Incidentally, the value of WL which the operator actually feels can be calculated by measurement in a limited status, but enhancement in accuracy can be expected when there are a variety of characteristics of the status. Furthermore, a larger number of statuses to be measured is preferred; however, to the contrary, too many statuses may sometimes be affected by noise and degrade the accuracy. In such a case, for example, a plurality of load weights may be prepared and applied with respect to car driving by calculating the load weights separately according to a road class such as general roads and freeways.

An embodiment of the present invention has been explained above. Regarding the concept of WL, when work intensity is high, the operator's concentration and efforts are required; and if this state continues, the operator will feel mental fatigue; and if that state continues for a long time, it is believed to also cause mental illness such as dysphoria. Furthermore, even if a state of low work intensity continues for a long time, this will lead to loss of interest, tediousness, dissatisfaction, the operator's deterioration in confidence, and decrease in productivity. Furthermore, when another work which interferes with the original work occurs, it is believed to cause an accident during the work due to impairment of concentration.

For example, car accidents due to unfavorable WL are problems also for the operator who performs the work to drive a car. Specifically speaking, there are accidents due to dozing or impaired attention caused by fatigue and a monotonous driving state as a result of long-hour driving. Furthermore, there are many accidents caused by failures in sensing, recognizing, and avoiding dangers because the operator watches and listens to many information by using information equipment such as a smartphone or the car navigation system, and operates the equipment while driving; and the operator's acts of watching, listening to, using, and/or operating the information equipment in the car may cause distraction of attention which would disturb the recognition, judgment, and operation functions as the operator's resources.

Therefore, it is required to improve the work environment by observing and evaluating the work intensity performed by the operator and the status of the operator which is reactions of the work intensity by using WL, selecting appropriate information provision, considering timing of such information provision, and devising work processes. Regarding the car driving, there is an expectation for development of a new system that estimates the operator's WL with respect to human factors in accidents (errors in each of "recognition," "judgment," and "operation") and limiting behaviors of the car itself, the amount of information presented by the information equipment, and a required operation amount when the above-estimated human factors are in a high level.

Conventionally, for example, the following indexes have been used as methods for evaluating WL: a physiological index for measuring the operator' heart rate, brain waves, amylase content, etc. by using sensors; a subjective index for evaluating scores using questionnaires; and a sub-issue index for measuring work effects when a sub-issue is given. There have been techniques by means of these indexes and, particularly regarding car driving work, techniques that use evaluation results of the operator's WL measured by using these indexes, select information to be presented, with equipment inside the vehicle, to the operator, and adjust timing. However, the conventional techniques are premised on output of WL specialized in a status specified in advance. However, in fact, almost countless numbers of statuses can exist. It is difficult and unrealistic to measure WL in all those statuses.

In this embodiment, the status estimation, the load estimation, and the margin estimation can be performed by using the task condition table, the subtask table, the required subtask amount table, and the load weighting table as described above. Regarding all the statuses, the required load amount in such statuses can be analyzed on the basis of a combination of a limited number of tasks and a limited number of subtasks.

Furthermore, the load weighting table is corrected so as to approximate to WL which the operator feels. As a result, it is possible to provide a practical work environment which has a high coverage of even an enormous amount of statuses and can be maintained and managed easily by selecting the information presentation according to the margin.

Incidentally, in the above explanation, the required load amount is calculated by using the task condition table, the subtask table, the required subtask amount table, and the load weighting table, but not all of them need to be used. It is only necessary to be capable of identifying the aforementioned task and subtask based on the input information, and acquiring the required load amount, which is indicative of the mental load on the operator based on the subtask. Similarly, in the above explanation, whether the presented information can be presented or not is judged by using the margin and the information presentation table; however, it is not always necessary to use the information presentation table and it is only necessary to be capable of judging whether the information can be presented or not, according to the margin.

Furthermore, in the above explanation, the amount obtained by subtracting the load amount calculated by the load estimation unit from the load limit amount is used as the margin; however, it is only necessary to be capable of acquiring the margin based on the required load amount and the acquisition technique is not limited to the above-described technique. For example, the margin may be acquired based on the required load amount and a specified function.

Furthermore, the aforementioned tables are one example and the tables are not limited to those illustrated in the drawings. For example, it is only necessary to have information capable of indicating each piece of the aforementioned information such as tasks, subtasks and the required load amount, the weighting coefficient, the constant term, and the required presentation amount. The configuration of the information presentation apparatus is also one example and is not limited to the configuration illustrated in the drawings. For example, some unit may have at least part of the functions of other units and one unit may be divided into a plurality of units. Furthermore, the information presentation apparatus may be a one independent apparatus or may be configured as part of another apparatus (such as a navigation system).

The invention devised by the inventors of the present application has been specifically described according to the embodiment; however, the present invention is not limited to the aforementioned embodiment, and includes various variations within the range not departing from the gist of the invention. For example, the aforementioned embodiment has been described in detail in order to explain the invention in an easily comprehensible manner and is not necessarily limited to that having all the configurations explained above. Furthermore, part of the configuration of a certain embodiment can be replaced with the configuration of another embodiment and the configuration of another embodiment can be added to the configuration of a certain embodiment. Also, part of the configuration of each embodiment can be added to, or deleted from, or replaced with, the configuration of another configuration.

Furthermore, each of the aforementioned drawings illustrates control lines and information lines which are considered to be necessary for the explanation; however, not all control lines or information lines in the implementation are necessarily indicated in the drawings. Practically, it may be assumed that almost all components are connected to each other.

(Second Embodiment)

An explanation will be given about an embodiment of an information presentation apparatus with improved usability by calculating a WL value which is more adapted for an individual's characteristics on the basis of the above-described embodiment.

[Description of Configuration]

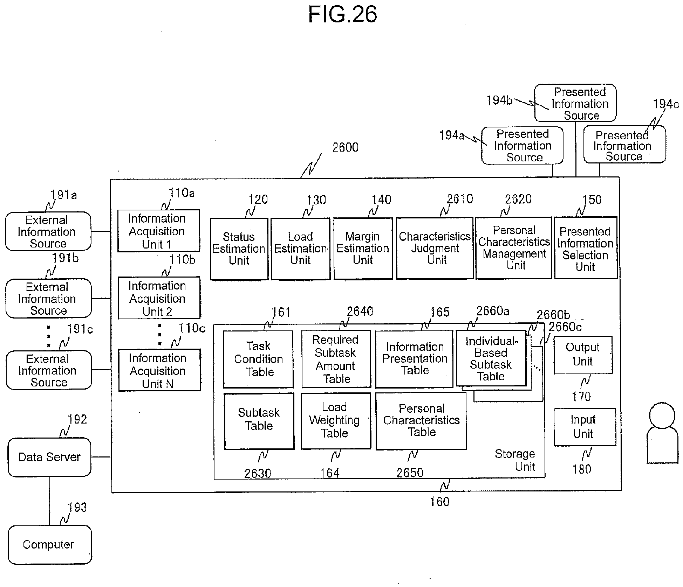

Fig. 26 is an example of a block diagram of an information presentation apparatus according to this embodiment. An information presentation apparatus 2600 includes each processing block explained with reference to Fig. 1, a characteristics judgment unit 2610, and a personal characteristics management unit 2620; and the storage unit 160 stores a subtask table 2630, a required subtask amount table 2640, a personal characteristics information table 2650, and an individual-based subtask table 2660.

The characteristics judgment unit 2610 judges the operator's work characteristics by using various information of the information acquisition unit 110. The personal characteristics management unit 2620 generates the individual-based subtask table 2660 based on the subtask table 2630, the required subtask amount table 2640, and the personal characteristics information table 2650 by using the judgment results of the characteristics judgment unit 2610.

Now, an example of the tables stored in the storage unit 160 will be explained in detail. Each of the tables explained below may be stored in the storage unit 160 in advance or, for example, created or updated at any desired timing.

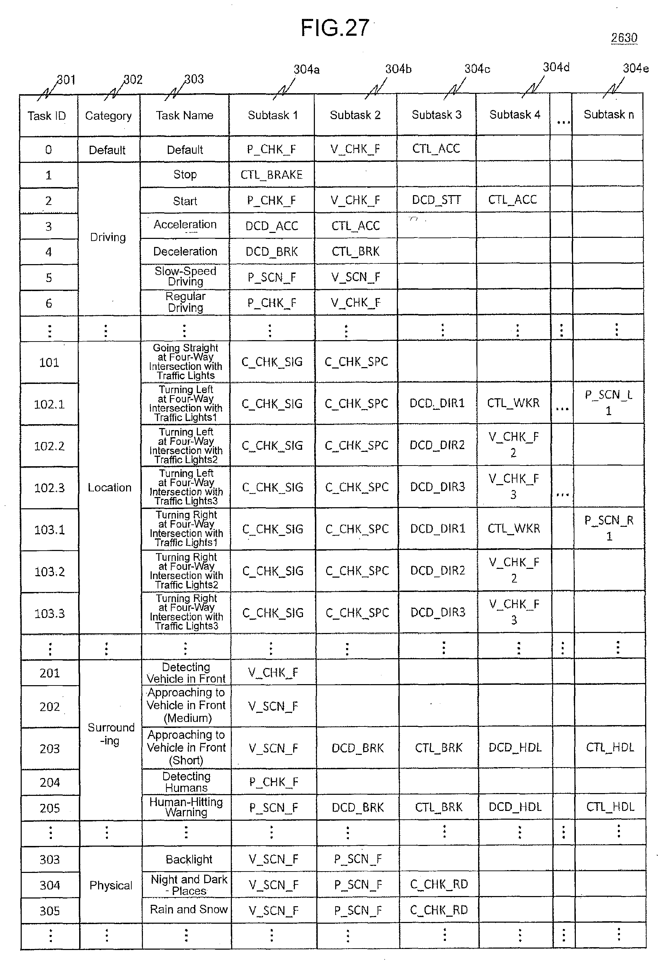

Fig. 27 is an explanatory diagram of an example of the subtask table. The content of each record of the subtask table 2630 is the same as explained with reference to Fig. 3. Three subtask synthesis patterns are defined and the content is changed according to three proficiency levels with respect to tasks of turning left and turning right at a four-way intersection with traffic lights. For example, turning left 1 at the four-way intersection with traffic lights assumes a case of a low proficiency level of this task (turning left at the intersection); and regarding a traveling direction judgment subtask (DCD_DIR), a subtask of a work load degree according to each pattern is assigned. The subtask configuration pursuant to the low proficiency level includes subtasks which would not be included in a case of a higher proficiency level, such as a right turning indicator operation (CTL_WKR). This is because if the driver's proficiency level increases, recognition processing which is executed based on rules is automated and can be executed unconsciously, so that it is judged that assignment of the subtask is not necessary for those other than the operator with the low proficiency level. By using this table, the WL value according to the proficiency level can be calculated as described later; and as a result, the effect of enhancement of safety during the work can be achieved. Incidentally, the task ID of a task which changes according to the proficiency level is provided with one decimal place so that the task ID 301 of the subtask table 162 corresponds to the task ID 201 of the task condition table 161. Without limitation to this example, a suffix may be provided as in "102A" and "102B."

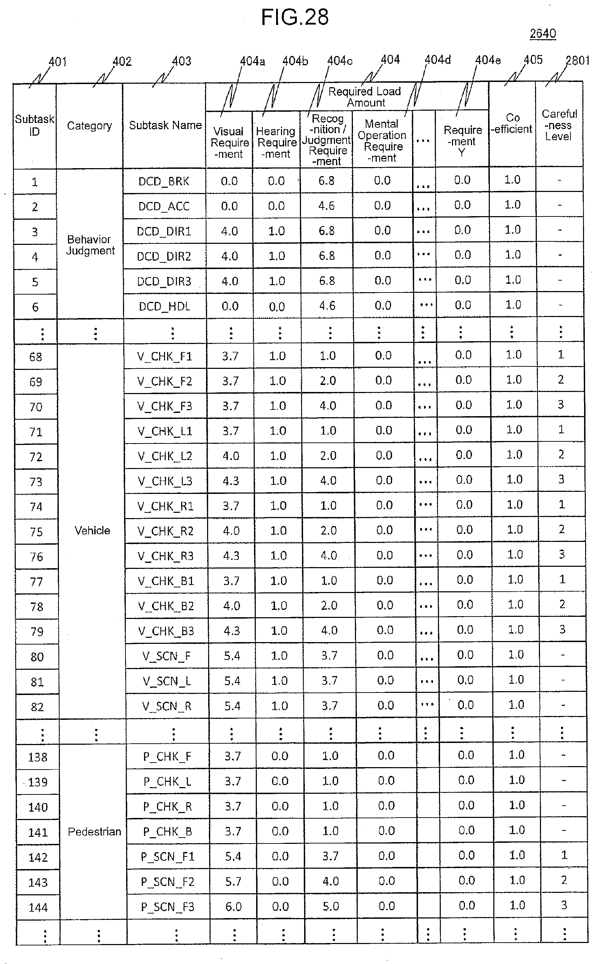

Fig. 28 is an explanatory diagram of an example of the required subtask amount table according to the proficiency level. The required subtask amount table 2640 includes each of the records 401 to 405 explained with reference to Fig. 4 and a carefulness level 2801. The carefulness level 2801 is used for association with carefulness level information included in the operator's characteristics information table described later. The required subtask amount table 163 in this embodiment defines three-level required load amounts with respect to a traveling direction decision task (DCD_DIR); and the same applies to vehicle check tasks (front: V_CHK_F; right side: V_CHK_R; left side: V_CHK_L; and behind: V_CHK_B) and pedestrian check tasks (front: P_SCN_F; right side: P_SCN_R; left side: P_SCN_L; and behind: P_SCN_B) around the driver's own vehicle. Furthermore, subtasks regarding which the mental load may be considered to change due to the operator's characteristics may be defined in the same manner.

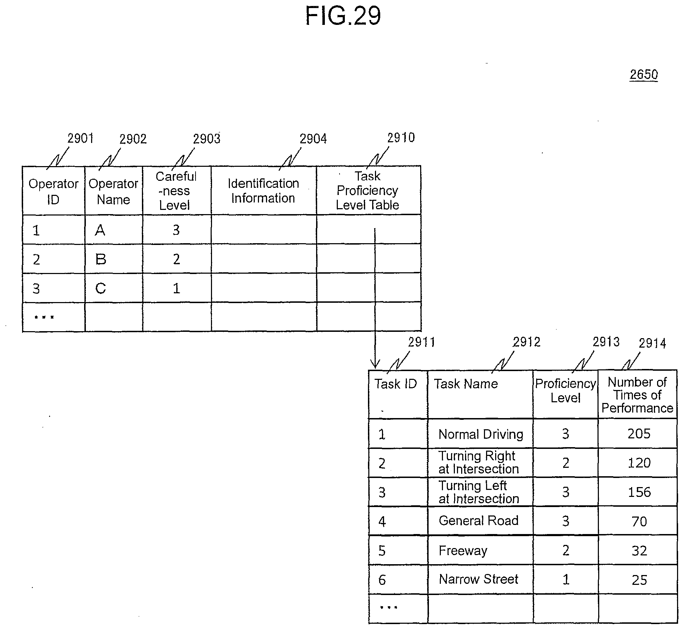

Fig. 29 is an explanatory diagram of an example of the personal characteristics information table. Each record of the personal characteristics information table 2650 includes an operator ID 2901, an operator name 2902, a carefulness level 2903, identification information 2904, and a task proficiency level table 2910 and defines work characteristics information about each operator. Furthermore, each record of the task proficiency level table 2910 includes a task ID 2911, a task name 2912, a proficiency level 2913, and the number of times of performance 2914. The operator ID 2901 is a unique number for uniquely identifying the relevant operator. The operator name 2902 is, for example, literal information which can be designate by the operator using the input unit 180.

The carefulness level 2903 is an index indicative of driving carefulness which is one of the operator's characteristics and is defined in three levels as one example of implementation in this embodiment. The identification information 2904 is information for the information presentation apparatus 2600 to autonomously identify the operator; and the operator registers, for example, face image information and voice information. For example, when registering the operator name 2902, a face image of the operator is captured by a camera, which is not illustrated in Fig. 26, and the captured face image is registered in the identification information 2904; and after that, a face image of the operator is captured at the time of activation of, or during the operation of, the information presentation apparatus 2600 and similarity between the captured image and the registered identification information is judged, thereby identifying the user.

Incidentally, for example, if who is the user is manually set every time the operator starts using the information presentation apparatus 2600, the user can be identified even without the identification information 2904. The task proficiency level table 2910 is used to manage the proficiency level information of each task for each operator. The task ID 2911 is a unique number for uniquely identifying the relevant task. The task name 2912 corresponds to the value of the task name 203 of the task condition table 161.

The task ID 2911 and the task name 2912 do not have to take on all tasks of the task condition table 161 and may be defined by extracting only tasks whose subtasks switch depending on the proficiency level. The proficiency level 2913 is an index indicative of how proficient the operator is with respect to the relevant task. In this embodiment, the proficiency level 2913 is expressed with three levels. The number of times of performance 2914 indicates the number of times the relevant task was executed.

Incidentally, items other than the above-explained items may be added to the personal characteristics information table, which may be used for workload estimation and margin estimation. For example, such additional items may include the operator's sex, date of birth, age, history information about roads where the operator passed, and district information about where the operator's residence is located.

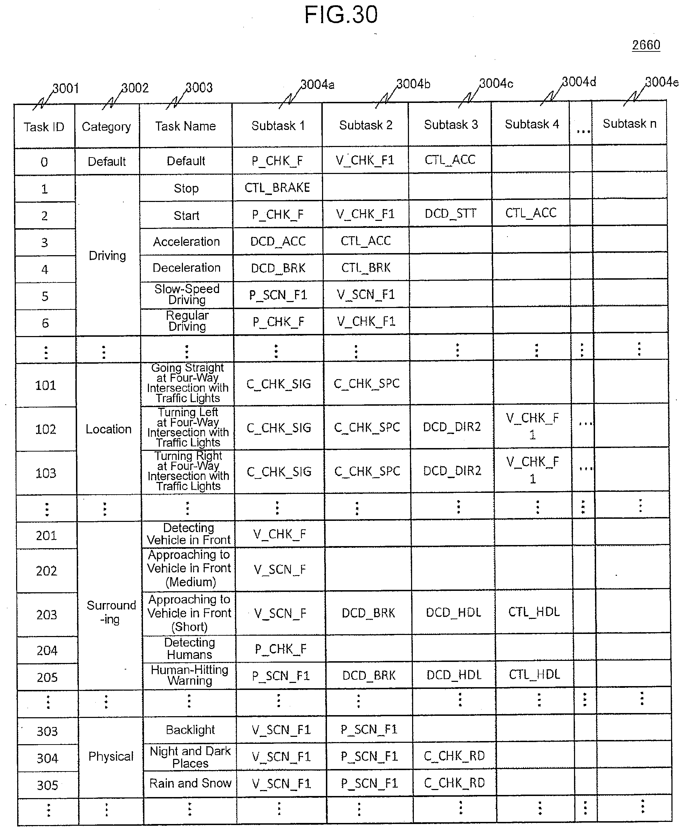

Fig. 30 is an explanatory diagram of an example of the individual-based subtask table. Each record of the individual-based subtask table 2660 is the same as that of the subtask table 162. A combination of subtasks in which the personal characteristics are reflected is defined by the personal characteristics management unit 2620 on the basis of the operator's characteristics in accordance with a processing flow described later. It will be used for the subtask estimation processing of the load estimation unit 130. Furthermore, individual-based subtask tables as many as the number of operators will be generated.

[Description of Processing]

Processing for estimating the workload which matches the operator's personal characteristics by using the apparatus configuration and the table group which have been explained above will be described below.

The operator firstly registers the operator's information about themselves in the information presentation apparatus 2600. Once the registration is completed, the operator's own driving performance information is recorded in the personal characteristics information table and workload estimation and information presentation processing which is suited for the relevant individual will be executed until the above information is deleted.

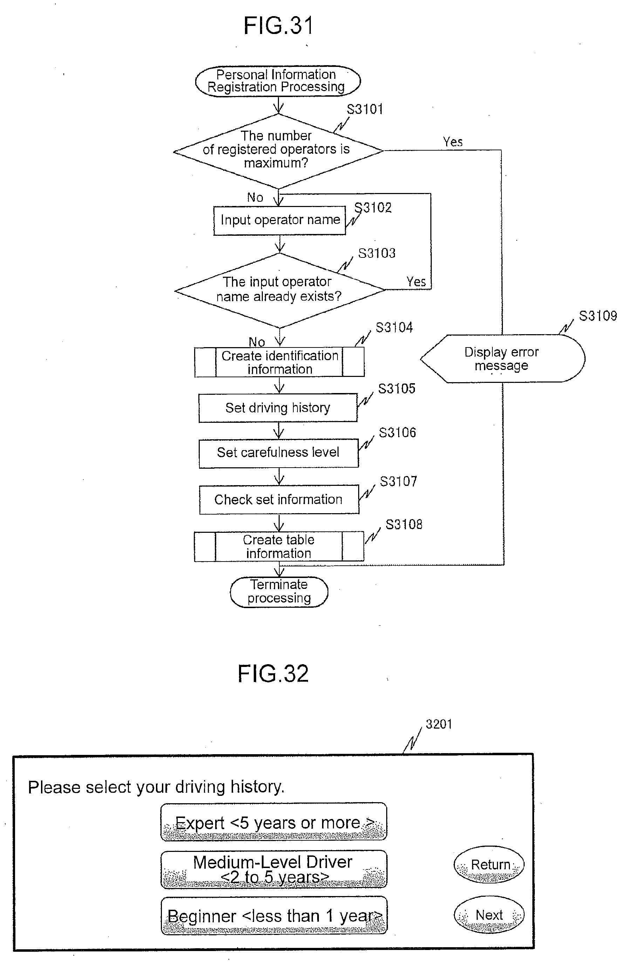

Fig. 31 is an example of registration of personal information required for each individual, and information initialization processing of the information presentation apparatus 2600. This processing is executed, for example, when the operator uses the information presentation apparatus 2600 for the first time.

In S3101, whether the number of persons registered in the personal characteristics information table has reached the maximum number or not is firstly judged. When the number of registered persons has reached the maximum number, the processing proceeds to S3109; and when the number of registered persons has not reached the maximum number, the processing proceeds to S3102.

In S3102, the operator inputs the operator's name by using the input device. An input method is to use, for example, a software keyboard or voice input.

In S3103, whether the input operator name is already registered in the personal characteristics information table or not is judged; and when the input operator name is already registered in the personal characteristics information table, the processing returns to the input processing in S3102; and when the input operator name is not registered in the personal characteristics information table, the processing proceeds to S3104. Incidentally, when the input operator name is registered, for example, an error message may be displayed to prompt the operator to input it again.

In S3104, the personal characteristics management unit 2620 updates the personal characteristics information table 2650. A new number is assigned as the operator ID 2901 and the operator name 2902 is an arbitrary character string designated by the operator. When other data is also generated at this point in time, a fixed value (for example, 1) is set as an initial value of the carefulness level 2903. The identification information 2904 is information capable of identifying an individual, such as face image information and voice information and is acquired during this processing. The task proficiency level table 2910 copies the task ID 2911 and the task name 2912 from the task condition table and sets fixed values (for example, 1 and 0) as initial values of the proficiency level and the number of times of trials with respect to each task.

In S3105, the operator's proficiency level is decided. For example, the operator's proficiency level is decided by making an inquiry to the operator about their driving history by, for example, displaying a screen illustrated in Fig. 32. When the operator selects an "Expert," the proficiency level is 3; when the operator selects a "Mid-level Driver," the proficiency level is 2; when the operator selects a "Beginner," the proficiency level is 1; and the obtained proficiency level is temporarily stored in a volatile memory or the like.

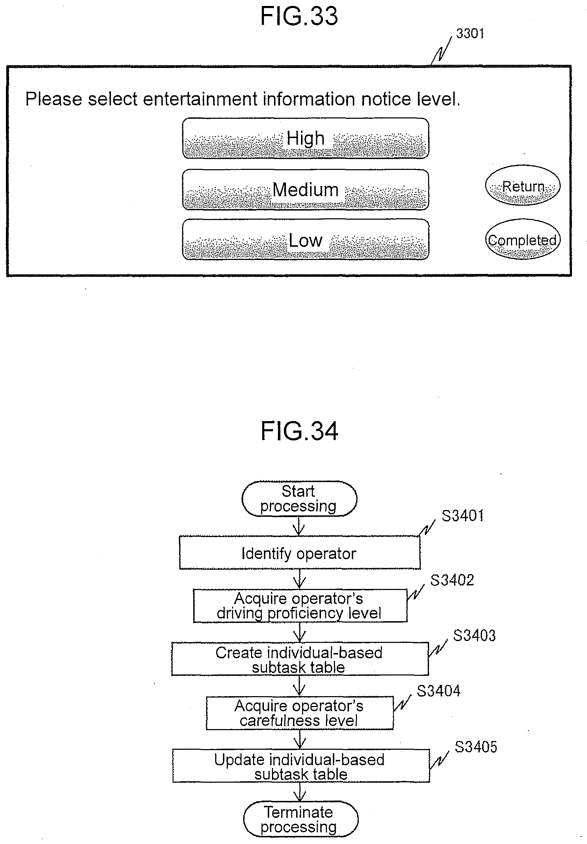

In S3106, the operator's carefulness level is decided. The operator's carefulness level is decided by making an inquiry to the operator about displayed levels of a message by, for example, displaying a screen illustrated in Fig. 33. When the operator selects level 3, the carefulness level is 3; when the operator selects level 2, the carefulness level is 2; when the operator selects level 1, the carefulness level is 1; and the obtained carefulness level is temporarily stored in a volatile memory or the like.

In S3107, the operator is prompted to check if the information which is set for the operator is correct or not. When the operator notices that there is an error in the settings, the operator may resume the processing from the beginning or an arbitrary position of the processing flow.

In S3108, the individual-based subtask table is created in accordance with the proficiency level decided in S3105 and the carefulness level decided in S3106. This processing flow is illustrated in Fig. 34.

In S3401, the personal characteristics management unit 2620 searches the personal characteristics information table 2640 for the relevant operator name.

In S3402, the personal characteristics management unit 2620 sets the proficiency level information, which is stored in S3105, to the proficiency level 2913 of each task of the task proficiency level table 2910.

In S3403, the personal characteristics management unit 2620 generates the individual-based subtask table 2660 using the subtask table 2630 on the basis of the proficiency level 2913 of the task proficiency level table 2910. The subtask table 2630 is sequentially scanned; and a record whose task ID 301 is an integer is copied as it is. Regarding a record of a decimal number, the record is copied only when a numerical value of its decimal place is equal to the proficiency level 2913 of the corresponding task proficiency level table 2910. Whether to copy the record or not may be judged based on whether the task name 303 has a number suffix at its end or not. As a result of this processing, the individual-based subtask table in which the proficiency level for each task of the individual is generated.

In S3404, the personal characteristics management unit 2620 sets the carefulness level information, which was stored in S3106, to the carefulness level 2903 of the personal characteristics information table 2650.

In S3405, the personal characteristics management unit 2620 replaces part of the information of, and thereby updates, the individual-based subtask table 2660 on the basis of the set carefulness level 2903. When the required subtask amount table 2640 is sequentially scanned and the carefulness level 2801 of each record matches the carefulness level 2903, the relevant subtask name 403 is retained and next replacement processing is executed. When the individual-based subtask table 2660 is sequentially scanned and the subtask 304 of each record matches the retained subtask name except for the suffix at its end, the subtask 304 is replaced with the retained subtask name. Incidentally, when the subtask 304 of each record matches the retained subtask name including the suffix at its end, the replacement may not be performed. As a result of this processing, the individual-based subtask table in which the carefulness level that is the individual's driving characteristics is reflected is generated.

In S3109, the output unit 170 displays a message indicating that the number of registered operators has reached the specified maximum value and personal information cannot be registered; and then the processing is terminated. In this case, the operator executes, for example, the registration processing again by, for example, deleting unnecessary information from data of the registered operators.

Incidentally, regarding the above-described example, the method for the operator to input necessary information every time has been explained; however, as for the information registration method, the information presentation apparatus 2600 may acquire the information via a communication function. For example, the operator registers personal information in the data server 192 from the computer 193 in advance and the information presentation apparatus 2600 acquires the information by communicating with the data server 192 according to predetermined content and by predetermined means. By this means, the operator can prepare the information to be registered in advance and have the advantage of being capable of smoothly starting using it.

Furthermore, the above-mentioned example shows an example where the operator is made to select the proficiency level and the carefulness level; however, the proficiency level and the carefulness level may be judged by combining a plurality of questions as illustrated in Fig. 32 and Fig. 33 and referring to a combination of answer results to such questions. For example, questions are given by a method capable of evaluation with scores in order to indirectly estimate driving characteristics by asking questions about, for example, the operator's confidence in their own driving ability, whether the operator proactively drives a car or not, or whether the operator is a worrier or not; and the proficiency level and the carefulness level are set according to a total score.

Furthermore, when the proficiency level and the carefulness level are not three-level settings, but are, for example, five-level settings, the number of options in Fig. 32 and Fig. 33 may be changed accordingly to five or the options may be used without any change and the values of the characteristics information to be assigned by answers may be changed (for example, the settings may be set so that when the "Expert" is selected, the proficiency level is 5; and when the "Mid-level Driver" or the "Beginner" is selected, the proficiency level is 3 or 1, respectively).

Furthermore, the settings of the proficiency level and the carefulness level are not limited to the above-described examples and each level may be fixed to an initial value, which may be later changed dynamically by detecting the operator's driving operation.

Furthermore, if items other than the proficiency level and the carefulness level are provided in the personal characteristics information table 2650, such other items may be registered by the operator in the same manner and may be used to create and update the individual-based subtask tables by adding processing to the processing flow in Fig. 34.

When a registered operator activates and starts using the information presentation apparatus 2600, the information presentation apparatus 2600 needs to identify the user in order to determine which individual-based subtask table to use. In order to do this, the identification information 2904 of the personal characteristics information table 2650 is used. For example, publicly disclosed techniques (such as image comparison methods and voice comparison methods) may be used for identification by capturing a face image by using a camera (which is not illustrated in Fig. 26), examining similarity between the captured image and a face image which is already registered in the identification information 2904, and determining data with a certain level or higher level of similarity to be the current operator. Under this circumstance, if the user cannot be identified due to no similarity found with any one of the identification information 2904, for example, a default individual-based sub task table which is created with the proficiency level 1 and the carefulness level 1 may be used as the individual-based sub task table 2660 by, for example, sending a message of failure in identification via the output unit 170.

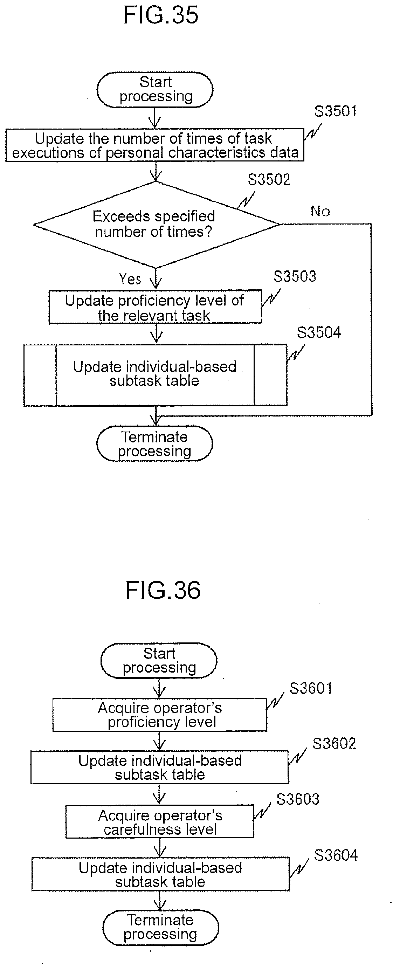

Driving work is nothing but to execute each task repeatedly; and every time each task is completed, the personal characteristics management unit 2620 executes table information update processing. Fig. 35 illustrates a flowchart of processing executed when processing of one task is completed.

In S3501, the personal characteristics management unit 2620 searches the task proficiency level table 2910 of the personal characteristics information table 2650 and adds 1 to the number of times of performance 2914 of the completed task.

In S3502, whether the number of times of performance 2914 of the relevant task as a result of the processing in S3501 exceeds a specified number of times (its value is arbitrary) or not is judged. When the number of times of performance 2914 of the relevant task exceeds the specified number of times, the processing proceeds to S3503; and the number of times of performance 2914 of the relevant task does not exceed the specified number of times, the processing is terminated. Regarding the specified number of times, for example, when the number of times of performance is 100, the proficiency level is increased from 1 to 2; and when the number of times of performance is 200, the proficiency level is increased from 2 to 3. Under this circumstance, when the proficiency level 2913 of the relevant task is 1, the judgment is made based on whether the number of times of performance 2914 has reached 100 or not; and when the proficiency level 2913 of the relevant task is 2, the judgment is made based on whether the number of times of performance 2914 has reached 200 or not. When the proficiency level of the relevant task is 3, the judgment always results in No. Furthermore, frequency in use during driving and the proficiency level should change depending on a task to be performed, so that different rules may be provided for each task.

In S3503, the proficiency level 2913 of the relevant task is added by 1.

In S3504, the content of the individual-based subtask table is updated as a result of the change in the proficiency level. A processing flow is illustrated in Fig. 36. Basically, this processing flow is the same as the processing flow from S3402 to S3405 in Fig. 34 which was explained about the generation of the individual-based subtask table. As a matter of course, the personal characteristics management unit 2620 identifies the operator in advance by using the identification information 2904 of the personal characteristics information table 2630.

In S3601 in the same manner as in S3402, the personal characteristics management unit 2620 acquires information of the relevant operator's task proficiency level table 2910 from the personal characteristics information table 2650. In S3602 in the same manner as in S3403, the personal characteristics management unit 2620 creates the individual-based subtask table 2660 by using the information of the subtask table and the relevant operator's proficiency level table. In S3603 in the same manner as S3404, the personal characteristics management unit 2620 acquires the relevant operator's carefulness level 2903 from the personal characteristics information table 2650. In S3604 in the same manner as in S3405, the personal characteristics management unit 2620 updates the individual-based subtask table 2660. When items other than the proficiency level and the carefulness level are included in the personal characteristics information table 2650, the individual-based subtask table may be updated according to such information.

The above explanation has been given about the example at the time of completion of the task processing; however, even when the operator's carefulness level is changed or any of the tables (such as the subtask table 2630 and the required subtask amount table 2640) is updated while using the information presentation apparatus 2600, the processing for updating the individual-based sub task table 2660 may be also executed.

On the other hand, if the workload calculation method changes on a real-time basis, there may be concerns that confusion might be caused as timing to display messages during driving may change without being recognized by the operator. Therefore, a possible method of implementation may be designed so that the processing for adding the number of times of performance of each task is executed during driving; and when the movement to a certain point is completed or by setting a certain traveling section or time, such as at the time of next activation, as update timing, the individual-based subtask table is updated in response to any changes of the proficiency level 2913 for all the tasks. When this happens, a message indicating that the workload calculation method has been updated may be displayed for the operator.

Next, an embodiment for autonomously judging the proficiency level and the carefulness level during driving will be explained.

For example, wobbling of a car body can be estimated by acquiring information about a steering angle of a steering wheel from CAN and observing changes in the relevant value when driving straight. Alternatively, if CAN information and road information, intersection information, and driving position coordinates of a car navigation system are combined, it is possible to obtain information about, for example, whether a turning-on operation of the turning indicator was performed at appropriate timing or not, or whether the operator observed the speed limit while driving or not.

Furthermore, if ADAS information is used, information about the inter-vehicle distance from a vehicle running in front can be acquired. If the characteristics judgment unit 2610 collects these pieces of information acquired from the information acquisition unit 110, classifies such information into information indicative of driving improvements and information indicative of driving tendencies on the basis of these performance results, and uses them to calculate the "proficiency level" and the "carefulness level," respectively, it is possible to autonomously switch these values. For example, the "proficiency level" may be calculated based on the degree of the car body wobbling and the turning indicator operation timing; and the "carefulness level" may be decided based on how well the speed limit is observed and whether the inter-vehicle distance from the vehicle in front is secured.

Regarding how to reflect datain the information to be used and each piece of the characteristics information, methods other than those described above may be employed; and depending on driving performance results, for example, judgment to decrease the value of each piece of the characteristics information from 2 to 1 or from 3 to 2 may be included.

Furthermore, the proficiency level and the carefulness level may be changed by monitoring the operator's behaviors while driving by using a camera and checking if movements of the operator's face or gaze direction do not deviate from safe behaviors. More specifically, for example, in a case of turning right at an intersection, recognition of a color of a traffic light before the intersection and recognition of vehicles coming from the opposite direction, people and bicycles passing a pedestrian crossing, and motorbikes approaching from behind are required in order to pass the intersection safely. So, it is necessary to perform the operation to visually recognize directions where they are located or they are assumed to be located; and as a result, this leads to a correct answer model indicating the number of times of visual recognition in which directions. A correct behavior rate is calculated by analyzing and estimating the operator's gaze direction from videos captured by the aforementioned camera for monitoring the operator and comparing it with the correct answer model.

The characteristics judgment unit 2610 calculates the proficiency level according to the correct behavior rate as follows: for example, when the correct behavior rate is 90% or more, the proficiency level is calculated as 3; when the correct behavior rate is 70% or more, the proficiency level is calculated as 2; and when the correct behavior rate is less than 70%, the proficiency level is calculated as 1. Furthermore, when the operator performs the visual recognition action repeatedly more than the correct answer model, it is judged that the carefulness level is high. For example, the carefulness level is calculated as follows: when the number of times of visual recognition exceeds that of the correct answer model by 10%, the carefulness level is calculated as 3; when the number of times of visual recognition exceeds that of the correct answer model, the carefulness level is calculated as 2; and when the number of times of visual recognition is less than that of the correct answer model, the carefulness level is calculated as 1. Data of the correct answer model and data of the number of times of the detected visual recognition in a case of executing this processing may be stored in the storage unit 160.

The above-described calculation processing may be executed for each task; however, a certain section or amount of time may be considered as an indication of timing to execute the calculation processing without expecting short-term changes. For example, the calculation may be performed during a period of time from the start of pathway guidance by the car navigation system to a time point of arrival at a destination.

Furthermore, the individual-based subtask table may be updated according to the processing flow illustrated in Fig. 36 immediately after acquisition of the calculation result, or the individual-based subtask table may be updated when driving of the certain section is completed.

Furthermore, the threshold value of the correct behavior rate which is indicated in the above-described calculation processing is one example and the value of the characteristics information may be decided by using another value; or the characteristics information has been explained as having three levels, but may be classified into more multiple levels.

[Creation and Updating of Tables]

The processing for creating and updating each of the tables illustrated in Fig. 23 to Fig. 25 can also be executed in this embodiment in the same manner; and, for example, the carefulness level 2801 of the required subtask amount table 2640 can be changed or a new subtask can be added according to the carefulness level. Since the individual-based subtask table 2660 is created based on the subtask table 2630, the required subtask amount table 2640, and the personal characteristics information table 2650, the individual-based subtask tables of all operators are reconstructed when the processing for changing these tables is completed.

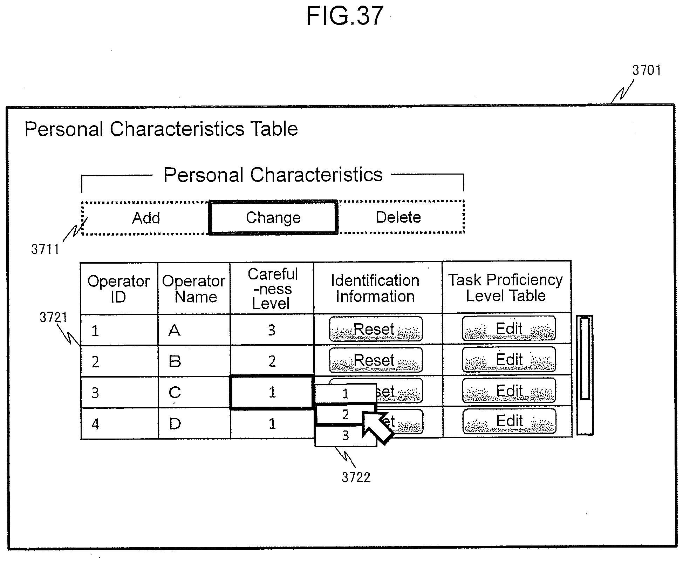

Fig. 37 is an example of a screen for creating and updating the personal characteristics information table 2650. Incidentally, Fig. 37 illustrates an example where information about the personal characteristics is to be changed; however, not only the information can be changed, but also information can be added and deleted.

A screen 3701 includes an area 3711, an area 3721, and so on. The area 3711 is an area for the user to designate which operation to perform, either one of addition, change, and deletion of information about the personal characteristics, by using the input device. The area 3721 is an area to input the content of the addition, change, or deletion of information about the personal characteristics. Since the change is selected here as explained above, information of each already existing record of the personal characteristics information table 2650 is displayed in the area 3721. The user selects an item relating to the information to be changed by using the input device. Fig. 37 illustrates an example where the carefulness level is selected; and the user then inputs a value to be changed.

The area 3722 on the screen 3701 is an example where a list of input items which can be selected is displayed. The user selects any one of the input items shown at the area 3722 using the input device. The computer 193 registers the selected input item, as a new carefulness level of the selected operator, in the personal characteristics information table 2650. Furthermore, when the user selects the identification information column which is indicated as "Reset" in the example illustrated in-Fig. 37, registration of the identification information as explained with respect to the processing for the new registration of the operator is performed again. Furthermore, when the operator selects the task proficiency level table column which is indicated as "Edit," the operation to add, change, or delete data of each record can be executed in the same manner with respect to the task proficiency level table 2901. Furthermore, an item addition, a name change, or a deletion can be performed with respect to the personal characteristics information table and information about each individual may be added, changed, or deleted with respect to the added item.

As a result of the processing explained in the above embodiments, a system which can be adapted to any characteristics is implemented by changing a combination of subtasks with respect to characteristics of different qualities, that is, characteristics which contribute to variations of the workload along with changes to improve each task over time, like the "proficiency level" of the operator, and characteristics which hardly change even after elapse of time such as habits of humans, like the "carefulness level" of the operator; and as a result, the workload value and the margin value which are adapted to the personal characteristics can be calculated and the effect of realizing safe and conformable information presentation can be obtained. Incidentally, the effect of enhancing the workload estimation accuracy can be obtained even with either one of them; however, better estimation can be realized by applying both of them at the same time.

The disclosed content of the following priority based application is incorporated hereinto by reference: Japanese Patent Application No. 2014-213302 (filed on October 20, 2014)

REFERENCE SIGNS LIST

| | |
|---|---|
| 100 | information presentation apparatus |
| 110 | information acquisition unit |
| 120 | status estimation unit |
| 130 | load estimation unit |
| 140 | margin estimation unit |
| 150 | presented information selection unit |
| 160 | storage unit |
| 161 | task condition table |
| 162 | subtask table |
| 163 | required subtask amount table |
| 164 | load weighting table |
| 165 | information presentation table |
| 170 | input unit |
| 180 | output unit |
| 191 | external information source |
| 192 | data server |
| 193 | computer |
| 194 | presented information source |
| 2600 | information presentation apparatus |
| 2610 | characteristics judgment unit |
| 2620 | personal characteristics management unit |
| 2630 | subtask table |
| 2640 | required subtask amount table |
| 2650 | personal characteristics information table |
| 2660 | individual-based subtask table |

**Claims**

1.  An information presentation apparatus comprising:

    a storage unit that stores task information indicative of one or more tasks each indicating a status, subtask information indicative of one or more subtasks each indicating a work element possibly executed by an operator, in the status of each task according to a first variable indicative of habituation of the operator with respect to each of the one or more tasks regarding each piece of the task information, and required subtask amount information indicative of a required load amount which is a mental load on each of the one or more subtasks according to a second variable indicative of a safe driving tendency of the operator;
    an information acquisition unit to which input information about the status is input from one or more external information sources;
    a status estimation unit that identifies the one or more tasks based on the input information and the task information;
    a driving characteristics judgment unit that generates the first variable indicative of habituation of the operator with respect to each of the one or more tasks regarding each piece of the task information and the second variable indicative of the operator's safe driving tendency, based on the input information;

a personal characteristics information management unit that generates operator-based subtask information based on the first variable, the second variable, and the subtask information;

a load estimation unit that identifies the one or more subtasks based on the one or more tasks identified by the status estimation unit, and the operator-based subtask information, and the load estimation unit also acquires the required load amount based on the identified one or more subtasks and the required subtask amount information;

a margin estimation unit that acquires a margin based on the acquired required load amount; and

a presented information selection unit that selects information to be presented based on the margin.

2. The information presentation apparatus according to claim 1, further comprising:

a presented information acquisition unit that acquires one or more presentation requests from one or more presented information sources, wherein:

the presented information selection unit selects at least one of the one or more presentation requests based on the margin and causes an output unit to output information corresponding to the selected presentation request.

3. The information presentation apparatus according to claim 1, further comprising:

an input unit, wherein:

at least one of the task information, the subtask information, and the required subtask amount information is input via the input unit and stored in the storage unit.

4. The information presentation apparatus according to claim 1, wherein:

the input information is acquired as chronological information including time information; and
the margin estimation unit calculates the margin at each time of the time information.

5. The information presentation apparatus according to claim 1, further comprising:

one or more presented information acquisition units that acquire one or more presentation requests from one or more presented information sources, wherein:

the margin estimation unit calculates the margin at each of a plurality of times; and
the presented information selection unit selects content of presented information to be presented in response to the presentation request-in accordance with the margin at each of the plurality of times and causes an output unit to output the selected content of the presented information.

6. The information presentation apparatus according to claim 1, wherein:

the storage unit further stores a weight according to the status in which the mental load may be imposed on the operator although the operator may not be necessarily caused to perform any work ; and
the load estimation unit acquires the required load amount based on the identified subtask, the required subtask amount information, and the weight.

7. A method comprising:

recording a first variable indicative of habituation of an operator for a driving task;
recording a second variable indicative of a safe driving tendency of the operator; and
generating operator-based subtask information based on the recorded first variable, the recorded second variable, and subtask information indicative of one or more subtasks each indicating a work element possibly executed by the operator, in a status of each of the one or more tasks.

8. The method according to claim 7, further comprising:

inputting input information about the status from one or more external information sources;

identifying one or more tasks based on the input information and task information indicative of one or more tasks indicating the status;

identifying one or more subtasks based on the identified task and the operator-based subtask information indicative of one or more subtasks each indicating a work element possibly executed by the operator in the status of each of the one or more tasks;

acquiring a required load amount, which is a mental load on each of the one or more subtasks, based on the identified subtask and required subtask amount information indicative of the required load amount;

acquiring a margin based on the acquired required load amount; and

selecting information to be presented based on the margin.

9. The method according to claim 7, further comprising:

inputting input information about the status from one or more external information sources;

identifying one or more tasks based on the input information and task information indicative of one or more tasks each indicating the status; and

changing a value of the first variable or the second variable when the operator completes executing the identified task.

10. A computer program product including a computer program that can be executed by a computer wherein the computer includes a storage device capable of storing:

task information indicative of one or more tasks each indicating a status;

subtask information indicative of one or more subtasks each indicating a work element possibly executed by an operator, in the status of each of the one or more tasks according to a first variable indicative of habituation of the operator with respect to each of the one or more tasks regarding each piece of the task information; and

required subtask amount information indicative of a required load amount which is a mental load on each of the one or more subtasks according to a second variable indicative of the operator's safe driving tendency; and wherein

the computer program causes the computer to function as:

an information acquisition unit to which input information about the status is input from one or more external information sources;

a status estimation unit that identifies the one or more tasks based on the input information and the task information;

a driving characteristics judgment unit that generates the first variable indicative of habituation of the operator with respect to the task regarding each piece of the task information and the second variable indicative of the operator's safe driving tendency, based on the input information;

a personal characteristics information management unit that generates operator-based subtask information based on the first variable, the second variable, and the subtask information;

a load estimation unit that identifies the one or more subtasks based on the one or more tasks identified by the status estimation unit, and the operator-based subtask information and acquires the required load amount based on the identified subtask and the required subtask amount information;

a margin estimation unit that acquires a margin based on the acquired required load amount; and

a presented information selection unit that selects information to be presented based on the margin.

# FIG.1

# FIG.2

161

| Task ID | Category | Task Name | Input Condition | | Input Condition | | ... | Input Condition X | |
|---|---|---|---|---|---|---|---|---|---|
| | | | Input Item | Condition | Input Item | Condition | | Input Item | Condition |
| 0 | Default | Default | Effective Task | None | | | | | |
| 1 | Driving Task | Stop | Speed | = 0 | | | | | |
| 2 | | Start | Speed | 1~5 | Brake | OFF | | | |
| 3 | | Acceleration | Speed | >5 | Accelerator | >10 | | | |
| 4 | | Deceleration | Speed | >5 | Brake | ON | | | |
| 5 | | Slow-Speed Driving | Speed | <=30 | | | | | |
| 6 | | Regular Driving | Speed | 30~50 | | | | | |
| ⋮ | ⋮ | ⋮ | ⋮ | ⋮ | ⋮ | ⋮ | | ⋮ | ⋮ |
| 101 | Location Task | Going Straight at Four-Way Intersection with Traffic Lights | Point Shape | Four-Way Intersection with Traffic Lights | Traveling Direction | Going Straight | | | |
| 102 | | Turning Left at Four-Way Intersection with Traffic Lights | Point Shape | Four-Way Intersection with Traffic Lights | Traveling Direction | Left or Left Before Inter-section | | | |
| 103 | ⋮ | Turning Right at Four-Way Intersection with Traffic Lights | Point Shape | Four-Way Intersection with Traffic Lights | Traveling Direction | Right or Right Before Inter-section | | ⋮ | ⋮ |
| 201 | Surrounding Task | Detecting Vehicle in Front | Detecting Vehicle in Front | ON | | | | | |
| 202 | | Approaching to Vehicle in Front (Medium) | Distance from Vehicle in Font | 0.6~1.5 | | | | | |
| 203 | | Approaching to Vehicle in Front (Short) | Distance from Vehicle in Font | <0.6 | | | | | |
| 204 | ⋮ | Detecting Humans | Detecting Humans | ON | ⋮ | ⋮ | | ⋮ | ⋮ |
| 205 | | Human-Hitting Warning | Human Warning | ON | | | | | |
| 303 | Physical Task | Backlight | Sunlight | Strong | Direction | Direction of Sun | | | |
| 304 | ⋮ | Night and Dark Places | Headlights | ON | ⋮ | ⋮ | | ⋮ | ⋮ |
| 305 | | Rain and Snow | Wipers | ON | | | | | |
| 901 | Dynamic Factor | Speed and Distance Between Vehicles | Speed | >10 | Distance from Vehicle in Font | >0.1 | | ⋮ | ⋮ |

## FIG.3

162

| Task ID | Category | Task Name | Subtask 1 | Subtask 2 | Subtask 3 | Subtask 4 | ... | Subtask n |
|---|---|---|---|---|---|---|---|---|
| 0 | Default | Default | P_CHK_F | V_CHK_F | CTL_ACC | | | |
| 1 | | Stop | CTL_BRAKE | | | | | |
| 2 | | Start | P_CHK_F | V_CHK_F | DCD_STT | CTL_ACC | | |
| 3 | Driving | Acceleration | DCD_ACC | CTL_ACC | | | | |
| 4 | | Deceleration | DCD_BRK | CTL_BRK | | | | |
| 5 | | Slow-Speed Driving | P_SCN_F | V_SCN_F | | | | |
| 6 | | Regular Driving | P_CHK_F | V_CHK_F | | | | |
| : | : | : | : | : | : | : | : | : |
| 101 | | Going Straight at Four-Way Intersection with Traffic Lights | C_CHK_SIG | C_CHK_SPC | | | | |
| 102 | Location | Turning Left at Four-Way Intersection with Traffic Lights | C_CHK_SIG | C_CHK_SPC | DCD_DIR | CTL_WKR | ... | P_SCN_L |
| 103 | | Turning Right at Four-Way Intersection with Traffic Lights | C_CHK_SIG | C_CHK_SPC | DCD_DIR | CTL_WKR | ... | P_SCN_R |
| : | : | : | : | : | : | : | : | : |
| 201 | | Detecting Vehicle in Front | V_CHK_F | | | | | |
| 202 | | Approaching to Vehicle in Front (Medium) | V_SCN_F | | | | | |
| 203 | Surround-ing | Approaching to Vehicle in Front (Short) | V_SCN_F | DCD_BRK | CTL_BRK | DCD_HDL | ... | CTL_HDL |
| 204 | | Detecting Humans | P_CHK_F | | | | | |
| 205 | | Human-Hitting Warning | P_SCN_F | DCD_BRK | CTL_BRK | DCD_HDL | ... | CTL_HDL |
| : | : | : | : | : | : | : | : | : |
| 303 | | Backlight | V_SCN_F | P_SCN_F | | | | |
| 304 | Physical | Night and Dark Places | V_SCN_F | P_SCN_F | C_CHK_RD | | | |
| 305 | | Rain and Snow | V_SCN_F | P_SCN_F | C_CHK_RD | | | |
| : | : | : | : | : | : | : | : | : |

# FIG.4

163

| Subtask ID | Category | Subtask Name | Required Load Amount | | | | | | Co-efficient |
| | | | Visual Require-ment | Hearing Require-ment | Recogni-tion / Judgment Require-ment | Mental Operation Require-ment | ... | Require-ment Y | |
| 1 | Behavior Judgment | DCD_BRK | 0.0 | 0.0 | 6.8 | 0.0 | ... | 0.0 | 1.0 |
| 2 | | DCD_ACC | 0.0 | 0.0 | 4.6 | 0.0 | ... | 0.0 | 1.0 |
| 3 | | DCD_DIR | 4.0 | 1.0 | 6.8 | 0.0 | ... | 0.0 | 1.0 |
| 4 | | DCD_HDL | 0.0 | 0.0 | 4.6 | 0.0 | ... | 0.0 | 1.0 |
| ⋮ | ⋮ | ⋮ | ⋮ | ⋮ | ⋮ | ⋮ | ⋮ | ⋮ | ⋮ |
| 64 | Vehicle | V_CHK_F | 3.7 | 1.0 | 1.0 | 0.0 | ... | 0.0 | 1.0 |
| 65 | | V_CHK_L | 3.7 | 1.0 | 1.0 | 0.0 | ... | 0.0 | 1.0 |
| 66 | | V_CHK_R | 3.7 | 1.0 | 1.0 | 0.0 | ... | 0.0 | 1.0 |
| 67 | | V_CHK_B | 3.7 | 1.0 | 1.0 | 0.0 | ... | 0.0 | 1.0 |
| 68 | | V_SCN_F | 5.4 | 1.0 | 3.7 | 0.0 | ... | 0.0 | 1.0 |
| 69 | | V_SCN_L | 5.4 | 1.0 | 3.7 | 0.0 | ... | 0.0 | 1.0 |
| 70 | | V_SCN_R | 5.4 | 1.0 | 3.7 | 0.0 | ... | 0.0 | 1.0 |
| ⋮ | ⋮ | ⋮ | ⋮ | ⋮ | ⋮ | ⋮ | ⋮ | ⋮ | ⋮ |
| 128 | Pedestrian | P_CHK_F | 3.7 | 0.0 | 1.0 | 0.0 | ... | 0.0 | 1.0 |
| 129 | | P_CHK_L | 3.7 | 0.0 | 1.0 | 0.0 | ... | 0.0 | 1.0 |
| 130 | | P_CHK_R | 3.7 | 0.0 | 1.0 | 0.0 | ... | 0.0 | 1.0 |
| 131 | | P_CHK_B | 3.7 | 0.0 | 1.0 | 0.0 | ... | 0.0 | 1.0 |
| 132 | | P_SCN_F | 5.4 | 0.0 | 3.7 | 0.0 | ... | 0.0 | 1.0 |
| 133 | | P_SCN_L | 5.4 | 0.0 | 3.7 | 0.0 | ... | 0.0 | 1.0 |
| 134 | | P_SCN_R | 5.4 | 0.0 | 3.7 | 0.0 | ... | 0.0 | 1.0 |
| ⋮ | ⋮ | ⋮ | ⋮ | ⋮ | ⋮ | ⋮ | ⋮ | ⋮ | ⋮ |
| 192 | Operation | CTL_BRK | 3.7 | 1.0 | 3.7 | 0.0 | ... | 0.0 | 1.0 |
| 193 | | CTL_ACC | 0.0 | 1.0 | 1.0 | 5.8 | ... | 0.0 | 1.0 |
| 194 | | CTL_WKR | 3.7 | 4.3 | 1.2 | 2.2 | ... | 0.0 | 1.0 |
| 195 | | CTL_HDL | 0.0 | 1.0 | 1.0 | 5.8 | ... | 0.0 | 1.0 |
| ⋮ | ⋮ | ⋮ | ⋮ | ⋮ | ⋮ | ⋮ | ⋮ | ⋮ | ⋮ |
| 256 | Roads, Structures, and Obstacles | C_CHK_SIG | 3.7 | 1.0 | 3.7 | 0.0 | ... | 0.0 | 1.0 |
| 257 | | C_CHK_SPC | 4.0 | 0.0 | 1.0 | 0.0 | ... | 0.0 | 1.0 |
| 258 | | C_CHK_LN | 4.0 | 0.0 | 1.0 | 0.0 | ... | 0.0 | 1.0 |
| ⋮ | ⋮ | ⋮ | ⋮ | ⋮ | ⋮ | ⋮ | ⋮ | ⋮ | ⋮ |

# FIG.5

164

| Requirement ID | Requirement Name | Weighting Coefficient |
|:---:|:---:|:---:|
| 0 | Constant Term | 22.1 |
| 1 | Visual Requirement | 0.6 |
| 2 | Hearing Requirement | 0.2 |
| 3 | Perception/ Judgment Requirement | 0.4 |
| 4 | Operation Requirement | 0.3 |
| ⋮ | ⋮ | ⋮ |
| Y | Requirement Y | 0.1 |

501        502        503

# FIG.6

<u>165</u>

| Item Number (601) | Information Source Name (602) | Information Type (603) | Required Presentation Amount (604) | Presentation Time (605) |
|---|---|---|---|---|
| 1 | Information Source 1 (Vehicle Warning) | Low Fuel Warning | 0 | 0 |
| 2 | | Charge Warning | 0 | 0 |
| 3 | | Brake Warning | 0 | 0 |
| 4 | | Hydraulic Pressure Warning | 0 | 0 |
| 5 | | Half-Shut Warning | 0 | 0 |
| 6 | | Seat Belt Warning | 0 | 0 |
| ⋮ | ⋮ | ⋮ | ⋮ | ⋮ |
| 21 | Information Source 2 (ADAS) | Warning of Collision with Vehicle in Front | 0 | 0 |
| 22 | | Caution with Too Close Approach to Vehicle in Front | 30 | 0 |
| 23 | | Pedestrian Hit Warning | 0 | 0 |
| 24 | | Lane Departure Warning | 30 | 0 |
| ⋮ | ⋮ | ⋮ | ⋮ | ⋮ |
| 31 | Information Source 3 (Navigation) | Turn-By-Turn | 30 | 5 |
| 32 | | Enlarged Intersection View | 50 | 5 |
| 33 | | Next Point Advance Notice | 50 | 5 |
| ⋮ | ⋮ | ⋮ | ⋮ | ⋮ |
| 41 | Information Source 4 (VICS) | Simple Graphic Display | 50 | 5 |
| 42 | | Character Display | 50 | 5 |
| ⋮ | ⋮ | ⋮ | ⋮ | ⋮ |
| 51 | Information Source 5 (Music Player) | Operation Mode | 70 | 0 |
| 52 | | Album Name Information | 70 | 2 |
| 53 | | Song Title Information | 70 | 2 |
| 54 | | Artist Name Information | 70 | 2 |
| 55 | | Replay Position | 70 | 0 |
| ⋮ | ⋮ | ⋮ | ⋮ | ⋮ |

# FIG.7

<u>700</u>

# FIG.8

START

Information Acquisition — S801

Status Estimation Processing — S802

Subtask Estimation Processing — S803

Load Calculation Processing — S804

Margin Estimation Processing — S805

Information Presentation Content Selection Processing — S806

Information Presentation — S807

End? — S808

No

yes

END

# FIG.9

900

| Item Number | Input | Data Name | Value |
|---|---|---|---|
| 1 | Information Source 1 (CAN) | Vehicle Speed | 42 |
| 2 | | Steering Angle | . 2 |
| 3 | | Accelerator | 0 |
| 4 | | Brake | ON |
| 5 | | Turning Indicator | 1 |
| 6 | | Wipers | 0 |
| ⋮ | ⋮ | ⋮ | ⋮ |
| 21 | Information Source 2 (Navigation) | Road Class | General Road |
| 22 | | Point Shape | Four-Way Intersection with Traffic Lights |
| 23 | | Traveling Direction | Right |
| 24 | | Point Distance | 120 |
| 25 | | Direction | 125 |
| 26 | | Latitude | 35.36541 |
| 27 | | Longitude | 135.68745 |
| ⋮ | ⋮ | ⋮ | ⋮ |
| 41 | Information Source 3 (ADAS) | Detecting Vehicle in Front | ON |
| 42 | | Distance from Vehicle in Front | 1.8 |
| 43 | | Warning of Collision with Vehicle in Front | OFF |
| 44 | | Detecting Humans | ON |
| 45 | | Human-Hitting Warning | OFF |
| 46 | | Lane Departure to Left | OFF |
| ⋮ | ⋮ | ⋮ | ⋮ |

# FIG.10

Status Estimation Processing — S802

Effective Task Initialization — S1001

Acquire task condition table (number of condition rows: R) — S1002

i=1 — S1003

Acquire i-th condition row (number of conditions: C) — S1004

j=1 — S1005

Acquire i-th condition — S1006

Information Comparison — S1007

Matches condition? — S1008
no

yes

j = j+1 — S1009

j <= C ? — S1010
yes
no

Add effective task — S1011

i = i+1 — S1012

i <= R ? — S1013
yes
No

END

# FIG.11

<u>1100</u>

| Item Number | Effective Task |
|---|---|
| 1 | Deceleration |
| 2 | Regular Driving |
| 3 | Turning Right at Four-Way Intersection with Traffic Lights |
| 4 | Distance from Vehicle in Front (Medium) |

# FIG.12

S803

Subtask Estimation
Processing

S1201
Effective
Subtask Initialization

S1202
Acquire subtask table
(number of condition rows: R)

S1203
Acquire effective
tasks (number of tasks: T)

S1204
i=1

S1205
Acquire i-th
effective task ID

S1206
Acquire subtasks with the
ID (number of subtasks: S)

S1207
j=1

S1208
Acquire J-th subtask

S1209
Already exists?
no — yes

S1210
Number of Times
of Subtask Additions
=1

S1211
Number of Times
= Number of Times
+1

S1212
j=j+1

S1213
j <= S ?
yes — no

S1214
i=i+1

S1215
i <= T ?
yes — no

END

## FIG.13

1300

| Item Number | Effective Subtask Name | Number of Times |
|---|---|---|
| 1 | DCD_BRK | 1 |
| 2 | CTL_BRK | 1 |
| 3 | P_SCN_F | 1 |
| 4 | V_SCN_F | 2 |
| 5 | C_CHK_SIG | 1 |
| 6 | C_CHK_SPC | 1 |
| 7 | DCD_DIR | 1 |
| 8 | CTL_WKR | 1 |
| ⋮ | ⋮ | ⋮ |

# FIG.14

S804

Load Calculation
Processing

S1401

Load Amount
Initialization

S1402

Acquire required
subtask amount table

S1403

Acquire load weighting
coefficient table

S1404

Acquire effective
subtasks
(number of tasks: S)

S1405

i=1

S1406

Acquire i-th effective
subtask name

S1407

Acquire required load
amount for each required
attribute

S1408

Add the acquired amount
to total sum of each required
attribute

S1409

i=i+1

S1410

i <= S ?

yes

no

S1411

Calculate dynamic
factor value

S1412

Dynamic Factor
Multiplication

S1413

Load Weighting
Multiplication

S1413

Calculate one-
dimensionalized load

END

## FIG.15

## FIG.16

## FIG.17

# FIG.18

1801

1802

1502

Watch out for
Rear-End Collision

Margin

km/h

# FIG.19

1901

| Item Number | Input Data | Duration |
|---|---|---|
| 1 | Data 1 | 30 |
| 2 | Data 2 | 52 |
| 3 | Data 3 | 510 |
| 4 | Data 4 | 65 |
| 5 | Data 5 | 109 |
| 6 | Data 6 | 21 |
| 7 | Data 7 | 52 |
| 8 | Data 8 | 31 |
| ⋮ | ⋮ | ⋮ |

# FIG.20

2001

1503

1504

58
km/h

2002

2002a

2002b

# FIG.21

2101

| | |
|---|---|
| Normal | Required Time: 1 hour 20 minutes<br>Travel Distance: 67 km |
| Less Fatigue | Required Time: 1 hour 40 minutes<br>Travel Distance: 76 km |
| Less Strain | Required Time: 1 hour 52 minutes<br>Travel Distance: 82 km |
| Slow-paced Driving | Required Time: 1 hour 40 minutes<br>Travel Distance: 76 km |

FIG.22

# FIG.23

2301

## Task Condition Table

Task

- Add  |  **Change**  |  Delete

2311

| Task ID | Category | Task Name | Input Condition 1 | |
| --- | --- | --- | --- | --- |
| | | | Input Item | Condition |
| 0 | Default | Default | Effective Task | Shift Position |
| 1 | | Stop | Speed | Speed |
| 2 | Driving | Start | Speed | Accelerator |
| 3 | Task | Acceler -ation | Speed | Brake |
| 4 | | Deceler -ation | Speed | Turning Indicator |

2321

2322

2323

New Category

2331

## FIG.24

_2401_

**Subtask Table**

┌──────── Subtask ────────┐

| Add | Change | Delete |

_2411_

| Task ID | Category | Task Name | Subtask 1 | Subtask 2 | Subtask 3 |
|---------|----------|-----------|-----------|-----------|-----------|
| 0 | Default | Default | P_CHK_F | DCD_BRK | _ACL |
| 1 | | Stop | CTL_BRAKE | DCD_ACC | |
| 2 | Driving | Start | P_CHK_F | DCD_DIR | _STT |
| 3 | Task | Acceler -ation | DCD_ACC | DCD_HDL | |
| 4 | | Deceler -ation | DCD_BRK | DCD_L_TURN | |

_2421_

_2422_   _2423_

## FIG.25

_2501_

**Required Subtask Amount Table**

┌──────── Subtask ────────┐

| Add | Change | Delete |

_2511_

| Subtask ID | Category | Subtask Name | Visual Require -ment | Hearing Require -ment | Recogni -tion/ Judgment Require -ment | Mental Operation Require -ment |
|------------|----------|--------------|---------------------|----------------------|--------------------------------------|-------------------------------|
| 1 | | DCD_BRK | 0.0 | 0.0 | 6.8 | 0.0 |
| 2 | Behavior Judgment | DCD_ACC | 0.0 | 0.0 | 4.6 | 0.0 |
| 3 | | DCD_DIR | 4.0 | 1.0 | 6.8 | 0.0 |
| 4 | | DCD_HDL | 0.0 | 0.0 | 4.6 | 0.0 |

_2521_

| New Category |

_2531_   _2522_

FIG.26

# FIG.27

2630

| Task ID | Category | Task Name | Subtask 1 | Subtask 2 | Subtask 3 | Subtask 4 | ... | Subtask n |
|---|---|---|---|---|---|---|---|---|
| 0 | Default | Default | P_CHK_F | V_CHK_F | CTL_ACC | | | |
| 1 | Driving | Stop | CTL_BRAKE | | | | | |
| 2 | | Start | P_CHK_F | V_CHK_F | DCD_STT | CTL_ACC | | |
| 3 | | Acceleration | DCD_ACC | CTL_ACC | | | | |
| 4 | | Deceleration | DCD_BRK | CTL_BRK | | | | |
| 5 | | Slow-Speed Driving | P_SCN_F | V_SCN_F | | | | |
| 6 | | Regular Driving | P_CHK_F | V_CHK_F | | | | |
| ⋮ | ⋮ | ⋮ | ⋮ | ⋮ | ⋮ | ⋮ | ⋮ | ⋮ |
| 101 | Location | Going Straight at Four-Way Intersection with Traffic Lights | C_CHK_SIG | C_CHK_SPC | | | | |
| 102.1 | | Turning Left at Four-Way Intersection with Traffic Lights1 | C_CHK_SIG | C_CHK_SPC | DCD_DIR1 | CTL_WKR | ... | P_SCN_L1 |
| 102.2 | | Turning Left at Four-Way Intersection with Traffic Lights2 | C_CHK_SIG | C_CHK_SPC | DCD_DIR2 | V_CHK_F2 | | |
| 102.3 | | Turning Left at Four-Way Intersection with Traffic Lights3 | C_CHK_SIG | C_CHK_SPC | DCD_DIR3 | V_CHK_F3 | ... | |
| 103.1 | | Turning Right at Four-Way Intersection with Traffic Lights1 | C_CHK_SIG | C_CHK_SPC | DCD_DIR1 | CTL_WKR | | P_SCN_R1 |
| 103.2 | | Turning Right at Four-Way Intersection with Traffic Lights2 | C_CHK_SIG | C_CHK_SPC | DCD_DIR2 | V_CHK_F2 | | |
| 103.3 | | Turning Right at Four-Way Intersection with Traffic Lights3 | C_CHK_SIG | C_CHK_SPC | DCD_DIR3 | V_CHK_F3 | | |
| ⋮ | ⋮ | ⋮ | ⋮ | ⋮ | ⋮ | ⋮ | ⋮ | ⋮ |
| 201 | Surrounding | Detecting Vehicle in Front | V_CHK_F | | | | | |
| 202 | | Approaching to Vehicle in Front (Medium) | V_SCN_F | | | | | |
| 203 | | Approaching to Vehicle in Front (Short) | V_SCN_F | DCD_BRK | CTL_BRK | DCD_HDL | | CTL_HDL |
| 204 | | Detecting Humans | P_CHK_F | | | | | |
| 205 | | Human-Hitting Warning | P_SCN_F | DCD_BRK | CTL_BRK | DCD_HDL | | CTL_HDL |
| ⋮ | ⋮ | ⋮ | ⋮ | ⋮ | ⋮ | ⋮ | ⋮ | ⋮ |
| 303 | Physical | Backlight | V_SCN_F | P_SCN_F | | | | |
| 304 | | Night and Dark Places | V_SCN_F | P_SCN_F | C_CHK_RD | | | |
| 305 | | Rain and Snow | V_SCN_F | P_SCN_F | C_CHK_RD | | | |
| ⋮ | ⋮ | ⋮ | ⋮ | ⋮ | ⋮ | ⋮ | ⋮ | ⋮ |

# FIG.28

2640

| Subtask ID | Category | Subtask Name | Required Load Amount | | | | | | Co-efficient | Careful-ness Level |
|---|---|---|---|---|---|---|---|---|---|---|
| | | | Visual Require-ment | Hearing Require-ment | Recog-nition / Judgment Require-ment | Mental Operation Require-ment | ... | Require-ment Y | | |
| 1 | Behavior Judgment | DCD_BRK | 0.0 | 0.0 | 6.8 | 0.0 | ... | 0.0 | 1.0 | - |
| 2 | | DCD_ACC | 0.0 | 0.0 | 4.6 | 0.0 | ... | 0.0 | 1.0 | - |
| 3 | | DCD_DIR1 | 4.0 | 1.0 | 6.8 | 0.0 | ... | 0.0 | 1.0 | - |
| 4 | | DCD_DIR2 | 4.0 | 1.0 | 6.8 | 0.0 | ... | 0.0 | 1.0 | - |
| 5 | | DCD_DIR3 | 4.0 | 1.0 | 6.8 | 0.0 | ... | 0.0 | 1.0 | - |
| 6 | | DCD_HDL | 0.0 | 0.0 | 4.6 | 0.0 | ... | 0.0 | 1.0 | - |
| : | : | : | : | : | : | : | : | : | : | : |
| 68 | Vehicle | V_CHK_F1 | 3.7 | 1.0 | 1.0 | 0.0 | ... | 0.0 | 1.0 | 1 |
| 69 | | V_CHK_F2 | 3.7 | 1.0 | 2.0 | 0.0 | ... | 0.0 | 1.0 | 2 |
| 70 | | V_CHK_F3 | 3.7 | 1.0 | 4.0 | 0.0 | ... | 0.0 | 1.0 | 3 |
| 71 | | V_CHK_L1 | 3.7 | 1.0 | 1.0 | 0.0 | ... | 0.0 | 1.0 | 1 |
| 72 | | V_CHK_L2 | 4.0 | 1.0 | 2.0 | 0.0 | ... | 0.0 | 1.0 | 2 |
| 73 | | V_CHK_L3 | 4.3 | 1.0 | 4.0 | 0.0 | ... | 0.0 | 1.0 | 3 |
| 74 | | V_CHK_R1 | 3.7 | 1.0 | 1.0 | 0.0 | ... | 0.0 | 1.0 | 1 |
| 75 | | V_CHK_R2 | 4.0 | 1.0 | 2.0 | 0.0 | ... | 0.0 | 1.0 | 2 |
| 76 | | V_CHK_R3 | 4.3 | 1.0 | 4.0 | 0.0 | ... | 0.0 | 1.0 | 3 |
| 77 | | V_CHK_B1 | 3.7 | 1.0 | 1.0 | 0.0 | ... | 0.0 | 1.0 | 1 |
| 78 | | V_CHK_B2 | 4.0 | 1.0 | 2.0 | 0.0 | ... | 0.0 | 1.0 | 2 |
| 79 | | V_CHK_B3 | 4.3 | 1.0 | 4.0 | 0.0 | ... | 0.0 | 1.0 | 3 |
| 80 | | V_SCN_F | 5.4 | 1.0 | 3.7 | 0.0 | ... | 0.0 | 1.0 | - |
| 81 | | V_SCN_L | 5.4 | 1.0 | 3.7 | 0.0 | ... | 0.0 | 1.0 | - |
| 82 | | V_SCN_R | 5.4 | 1.0 | 3.7 | 0.0 | ... | 0.0 | 1.0 | - |
| : | : | : | : | : | : | : | : | : | : | : |
| 138 | Pedestrian | P_CHK_F | 3.7 | 0.0 | 1.0 | 0.0 | | 0.0 | 1.0 | - |
| 139 | | P_CHK_L | 3.7 | 0.0 | 1.0 | 0.0 | | 0.0 | 1.0 | - |
| 140 | | P_CHK_R | 3.7 | 0.0 | 1.0 | 0.0 | | 0.0 | 1.0 | - |
| 141 | | P_CHK_B | 3.7 | 0.0 | 1.0 | 0.0 | | 0.0 | 1.0 | - |
| 142 | | P_SCN_F1 | 5.4 | 0.0 | 3.7 | 0.0 | | 0.0 | 1.0 | 1 |
| 143 | | P_SCN_F2 | 5.7 | 0.0 | 4.0 | 0.0 | | 0.0 | 1.0 | 2 |
| 144 | | P_SCN_F3 | 6.0 | 0.0 | 5.0 | 0.0 | | 0.0 | 1.0 | 3 |
| : | : | : | : | : | : | : | : | : | : | : |

401 402 403 404a 404b 404c 404 404d 404e 405 2801

# FIG.29

2650

| Operator ID | Operator Name | Careful -ness Level | Identification Information | Task Proficiency Level Table |
|---|---|---|---|---|
| 1 | A | 3 | | |
| 2 | B | 2 | | |
| 3 | C | 1 | | |
| ... | | | | |

| Task ID | Task Name | Proficiency Level | Number of Times of Performance |
|---|---|---|---|
| 1 | Normal Driving | 3 | 205 |
| 2 | Turning Right at Intersection | 2 | 120 |
| 3 | Turning Left at Intersection | 3 | 156 |
| 4 | General Road | 3 | 70 |
| 5 | Freeway | 2 | 32 |
| 6 | Narrow Street | 1 | 25 |
| ... | | | |

# FIG.30

2660

| Task ID | Category | Task Name | Subtask 1 | Subtask 2 | Subtask 3 | Subtask 4 | ... | Subtask n |
|---------|----------|-----------|-----------|-----------|-----------|-----------|-----|-----------|
| | 3001 | 3002 | 3003 | 3004a | 3004b | 3004c | 3004d | 3004e |
| 0 | Default | Default | P_CHK_F | V_CHK_F1 | CTL_ACC | | | |
| 1 | | Stop | CTL_BRAKE | | | | | |
| 2 | | Start | P_CHK_F | V_CHK_F1 | DCD_STT | CTL_ACC | | |
| 3 | Driving | Acceleration | DCD_ACC | CTL_ACC | | | | |
| 4 | | Deceleration | DCD_BRK | CTL_BRK | | | | |
| 5 | | Slow-Speed Driving | P_SCN_F1 | V_SCN_F1 | | | | |
| 6 | | Regular Driving | P_CHK_F | V_CHK_F1 | | | | |
| ⋮ | ⋮ | ⋮ | ⋮ | ⋮ | ⋮ | ⋮ | ⋮ | ⋮ |
| 101 | | Going Straight at Four-Way Intersection with Traffic Lights | C_CHK_SIG | C_CHK_SPC | | | | |
| 102 | Location | Turning Left at Four-Way Intersection with Traffic Lights | C_CHK_SIG | C_CHK_SPC | DCD_DIR2 | V_CHK_F1 | ... | |
| 103 | | Turning Right at Four-Way Intersection with Traffic Lights | C_CHK_SIG | C_CHK_SPC | DCD_DIR2 | V_CHK_F1 | ... | |
| ⋮ | ⋮ | ⋮ | ⋮ | ⋮ | ⋮ | ⋮ | ⋮ | ⋮ |
| 201 | | Detecting Vehicle in Front | V_CHK_F | | | | | |
| 202 | | Approaching to Vehicle in Front (Medium) | V_SCN_F | | | | | |
| 203 | Surround-ing | Approaching to Vehicle in Front (Short) | V_SCN_F | DCD_BRK | DCD_HDL | CTL_HDL | | |
| 204 | | Detecting Humans | P_CHK_F | | | | | |
| 205 | | Human-Hitting Warning | P_SCN_F1 | DCD_BRK | DCD_HDL | CTL_HDL | | |
| ⋮ | ⋮ | ⋮ | ⋮ | ⋮ | ⋮ | ⋮ | ⋮ | ⋮ |
| 303 | | Backlight | V_SCN_F1 | P_SCN_F1 | | | | |
| 304 | Physical | Night and Dark Places | V_SCN_F1 | P_SCN_F1 | C_CHK_RD | | | |
| 305 | | Rain and Snow | V_SCN_F1 | P_SCN_F1 | C_CHK_RD | | | |
| ⋮ | ⋮ | ⋮ | ⋮ | ⋮ | ⋮ | ⋮ | ⋮ | ⋮ |

# FIG.31

```
        ┌──────────────────────────┐
        │   Personal Information   │
        │  Registration Processing │
        └──────────────────────────┘
                    │
                    ▼           S3101
               ╱─────────────╲
              ╱  The number    ╲        Yes
             ╱ of registered    ╲──────────────────┐
             ╲ operators is     ╱                   │
              ╲  maximum?      ╱                    │
               ╲─────────────╱                      │
                    │ No                            │
                    ▼          S3102                │
        ┌──────────────────────────┐               │
        │   Input operator name    │               │
        └──────────────────────────┘               │
                    │                               │
                    ▼           S3103               │
               ╱─────────────╲                      │
              ╱  The input     ╲      Yes           │
             ╱  operator name   ╲─────────────┐     │
             ╲ already exists?  ╱             │     │
              ╲─────────────╱                 │     │
                    │ No       S3104          │     │
                    ▼                         ▼  S3109
        ┌──────────────────────────┐    ╱──────────────╲
        │  Create identification   │    │ Display error │
        │       information        │    │   message     │
        └──────────────────────────┘    ╲──────────────╱
                    │           S3105          │
                    ▼                          │
        ┌──────────────────────────┐          │
        │    Set driving history   │          │
        └──────────────────────────┘          │
                    │           S3106          │
                    ▼                          │
        ┌──────────────────────────┐          │
        │   Set carefulness level  │          │
        └──────────────────────────┘          │
                    │           S3107          │
                    ▼                          │
        ┌──────────────────────────┐          │
        │   Check set information  │          │
        └──────────────────────────┘          │
                    │           S3108          │
                    ▼                          │
        ┌──────────────────────────┐          │
        │      Create table        │          │
        │      information         │          │
        └──────────────────────────┘          │
                    │◄─────────────────────────┘
                    ▼
        ┌──────────────────────────┐
        │       Terminate          │
        │       processing         │
        └──────────────────────────┘
```

# FIG.32

3201

```
┌────────────────────────────────────────────────────────────┐
│                                                            │
│  Please select your driving history.                       │
│                                                            │
│           ┌──────────────────────────────┐                 │
│           │  Expert <5 years or more>    │                 │
│           └──────────────────────────────┘                 │
│                                                            │
│           ┌──────────────────────────────┐    ╭────────╮   │
│           │     Medium-Level Driver      │    │ Return │   │
│           │       <2 to 5 years>         │    ╰────────╯   │
│           └──────────────────────────────┘                 │
│                                              ╭────────╮   │
│           ┌──────────────────────────────┐   │  Next  │   │
│           │  Beginner <less than 1 year> │   ╰────────╯   │
│           └──────────────────────────────┘                 │
│                                                            │
└────────────────────────────────────────────────────────────┘
```

# FIG.33

3301

Please select entertainment information notice level.

High

Medium

Low

Return

Completed

# FIG.34

Start
processing

↓

S3401

Identify operator

↓

S3402

Acquire operator's
driving proficiency level

↓

S3403

Create individual-based
subtask table

↓

S3404

Acquire operator's
carefulness level

↓

S3405

Update individual-based
subtask table

↓

Terminate
processing

# FIG.35

```
        ┌──────────────┐
        │     Start     │
        │  processing   │
        └──────────────┘
               │                              S3501
    ┌──────────▼──────────────────┐
    │  Update the number of times of task │
    │ executions of personal characteristics data │
    └──────────────────────────────┘
               │                      S3502
           ◇───────────◇                        No
          ╱  Exceeds specified  ╲───────────────────┐
          ╲  number of times?  ╱                     │
           ◇───────────◇                             │
          Yes │                     S3503            │
    ┌─────────▼──────────────┐                       │
    │  Update proficiency level of │                 │
    │     the relevant task      │                   │
    └────────────────────────┘                       │
               │                   S3504             │
    ┌──────────▼──────────────────┐                  │
    │   Update individual-based    │                 │
    │        subtask table         │                 │
    └──────────────────────────────┘                 │
               │◄────────────────────────────────────┘
        ┌──────▼───────┐
        │  Terminate    │
        │  processing   │
        └──────────────┘
```

# FIG.36

```
        ┌──────────────┐
        │     Start     │
        │  processing   │
        └──────────────┘
               │               S3601
    ┌──────────▼──────────┐
    │   Acquire operator's  │
    │   proficiency level   │
    └──────────────────────┘
               │               S3602
    ┌──────────▼──────────┐
    │  Update individual-based │
    │      subtask table      │
    └──────────────────────┘
               │               S3603
    ┌──────────▼──────────┐
    │   Acquire operator's  │
    │   carefulness level   │
    └──────────────────────┘
               │               S3604
    ┌──────────▼──────────┐
    │  Update individual-based │
    │      subtask table      │
    └──────────────────────┘
               │
        ┌──────▼───────┐
        │  Terminate    │
        │  processing   │
        └──────────────┘
```

# FIG.37

3701

**Personal Characteristics Table**

┌──────── Personal Characteristics ────────┐

| Add | Change | Delete |

3711

| Operator ID | Operator Name | Careful-ness Level | Identification Information | Task Proficiency Level Table |
|---|---|---|---|---|
| 1 | A | 3 | Reset | Edit |
| 2 | B | 2 | Reset | Edit |
| 3 | C | 1 | 1 / et | Edit |
| 4 | D | 1 | 2 / et | Edit |
|   |   |   | 3 |   |

3721

3722

## INTERNATIONAL SEARCH REPORT

| International application No. |
| --- |
| PCT/JP2015/078649 |

| A. CLASSIFICATION OF SUBJECT MATTER |
| --- |
| *G06F17/30*(2006.01)i, *G08G1/16*(2006.01)i |

According to International Patent Classification (IPC) or to both national classification and IPC

| B. FIELDS SEARCHED |
| --- |
| Minimum documentation searched (classification system followed by classification symbols)<br>G06F17/30, G08G1/16 |

| Documentation searched other than minimum documentation to the extent that such documents are included in the fields searched |
| --- |
| Jitsuyo Shinan Koho          1922–1996    Jitsuyo Shinan Toroku Koho    1996–2015<br>Kokai Jitsuyo Shinan Koho    1971–2015    Toroku Jitsuyo Shinan Koho    1994–2015 |

| Electronic data base consulted during the international search (name of data base and, where practicable, search terms used) |
| --- |

### C. DOCUMENTS CONSIDERED TO BE RELEVANT

| Category* | Citation of document, with indication, where appropriate, of the relevant passages | Relevant to claim No. |
| --- | --- | --- |
| Y | US 2012/0150412 A1   (ELECTRONICS AND TELECOMMUNICATIONS RESEARCH INSTITUTE), 14 June 2012 (14.06.2012), paragraphs [0050] to [0069] & KR 10-2012-0066468 A | 1–10 |
| Y | JP 2006-258428 A   (Fujitsu Ten Ltd.), 28 September 2006 (28.09.2006), paragraphs [0024] to [0026], [0047] to [0053], [0071]; fig. 3 to 7 (Family: none) | 1–10 |
| Y | JP 2003-256980 A   (Aioi Insurance Co., Ltd.), 12 September 2003 (12.09.2003), paragraphs [0072] to [0074], [0084] (Family: none) | 1–10 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 November 2015 (24.11.15) | 08 December 2015 (08.12.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4637073 B
- JP 2008046759 A
- JP 2014213302 A